# EUROPEAN PATENT SPECIFICATION

(11) **EP 3 640 128 B1**
(45) Date of publication and mention of the grant of the patent: **23.08.2023**
(21) Application number: 18817527.7
(22) Date of filing: 12.06.2018
(51) Int. Cl.: B63B 25/16, F17C 9/02

(54) **RE-LIQUEFACTION SYSTEM OF EVAPORATIVE GAS AND SHIP**
WIEDERVERFLÜSSIGUNGSSYSTEM FÜR VERDAMPFUNGSGAS UND SCHIFF
SYSTÈME DE RELIQUÉFACTION DE GAZ D'ÉVAPORATION ET NAVIRE

(30) Priority: 13.06.2017 KR 20170074395; 21.06.2017 KR 20170078371; 31.05.2018 KR 20180062999
(43) Date of publication of application: 22.04.2020
(73) Proprietor: Hyundai Heavy Industries Co., Ltd., Ulsan 44032 (KR)
(72) Inventor: PARK, Jong Wan, Ulsan 44032 (KR); LEE, Jin Kwang, Ulsan 44032 (KR); KANG, Min Ho, Ulsan 44032 (KR); CHOI, Joe Young, Ulsan 44032 (KR); YOO, Byeong Yong, Ulsan 44032 (KR); LEE, Tae Seok, Ulsan 44032 (KR); KIM, Dae Soo, Ulsan 44032 (KR); HONG, Won Jong, Ulsan 44032 (KR); KO, Yoon Ae, Ulsan 44032 (KR)
(74) Representative: Betten & Resch
(86) International application number: PCT/KR2018/006673
(87) International publication number: WO 2018/230950

(56) References cited:
- JP-A- 2015 535 777
- KR-A- 20160 095 599
- KR-A- 20160 113 493
- KR-A- 20160 126 955
- KR-A- 20170 041 406
- KR-A- 20170 055 754
- KR-B1- 101 661 929
- KR-B1- 101 722 597

## Description

### TECHNICAL FIELD

The present invention relates a boil-off gas reliquefaction system and a ship.

### BACKGROUND ART

Recently, with the development of technologies, liquefied gas, such as liquefied natural gas and liquefied petroleum gas, has been widely used, instead of gasoline or diesel.

Liquefied natural gas is gas obtained by cooling and liquefying methane obtained by refining natural gas collected from a gas field. The liquefied natural gas is colorless and transparent liquid, produces few pollutants, and has a high calorific value. Hence, the liquefied natural gas is a very excellent fuel. On the other hand, liquefied petroleum gas is a fuel obtained by compressing and liquefying gas, of which main components are propane (C₃H₈) and butane (C₄H₁₀), collected from an oilfield, together with petroleum at room temperature. Like the liquefied natural gas, the liquefied petroleum gas is colorless and odorless, and has been widely used as fuel for home, a business, an industry, and a vehicle.

The liquefied gas is stored in a liquefied gas storage tank installed in a ship to be used as a fuel of an engine provided in the ship. A volume of the liquefied natural gas is decreased by 1/600 by liquefaction, and a volume of the liquefied petroleum gas is decreased by 1/260 by liquefaction, so that storage efficiency is high.

However, since the liquefied gas is kept in an extremely low temperature state in which the liquefied gas is forcibly liquefied by decreasing the temperature of the liquefied gas to the boiling point or less, a portion of the liquefied gas is naturally vaporized and then changed into boil-off gas when heat penetrates from the outside.

A volume of the boil-off gas phase-changed to vapor is drastically increased, which results in an increase in internal pressure of the liquefied gas storage tank. When the internal pressure of the liquefied gas storage tank exceeds a pressure at which the liquefied gas storage tank is endurable, the liquefied gas storage tank may be damaged.

Therefore, conventionally, in order to constantly maintain the internal pressure of the liquefied gas storage tank, there was used a method of decreasing the internal pressure of the liquefied gas storage tank by discharging boil-off gas to the outside and burning the discharged boil-off gas or a method of liquefying boil-off gas through a reliquefaction apparatus using a separate refrigerant and then collecting the liquefied boil-off gas in the liquefied gas storage tank.

However, when the boil-off gas is simply discharged to the outside, a problem of environmental pollution occurs. When the reliquefaction apparatus is used, a problem of cost, manpower, and the like, which are required to provide and manage the reliquefaction apparatus, occurs. Accordingly, it is required to develop a method of effectively treating boil-off gas generated due to penetration of heat from the outside.

Document KR 20160126995 A refers to a boil-off gas reliquefaction system and method, and more particularly, to compress the boil-off gas generated in a storage tank with a compressor, branch it, heat exchange with the boil-off gas before introduction of the compressor in a heat exchanger, and then use an expansion means. It relates to a boil-off gas re-liquefaction system capable of preventing clogging of a pipe line of a heat exchanger after adiabatic expansion to re-liquefy the boil-off gas, and after removing the lubricating oil contained in the compressed boil-off gas by providing an oil separator.

Document KR 20160113493 A refers to a liquefied gas treatment system, comprising: a boil-off gas compressor for compressing boil-off gas supplied from a liquefied gas storage tank and supplying it to a first customer; a boil-off gas heat exchanger for exchanging boil-off gas compressed by the boil-off gas compressor with boil-off gas supplied from the liquefied gas storage tank; a pressure control unit for primary expansion or decompression of the compressed boil-off gas; and a liquefied part for secondary expansion or decompression of at least a part of the boil-off gas supplied from the pressure control part, wherein the pressure control part comprises a pressure required by a second customer using a relatively lower pressure than the first customer.

### DISCLOSURE

### TECHNICAL PROBLEM

The present invention is conceived to solve the aforementioned problems. Accordingly, an object of the present invention is to provide a boil-off gas reliquefaction system and a ship, which can omit or reduce a reliquefaction apparatus by liquefying boil-off gas through heat exchange and decompression, and efficiently treat lubricant used in a boil-off gas compressor when the lubricant is introduced into a boil-off heat exchanger, etc.

### TECHNICAL SOLUTION

The present invention is defined in the independent claims. Preferred embodiments are defined in the dependent claims.

In accordance with an aspect of the present invention, there is provided a boil-off gas reliquefaction system, including: a boil-off gas compressor configured to compress, in multi-stages, boil-off gas generated in a liquefied gas storage tank and supply the compressed boil-off gas to a consumer; a boil-off gas heat exchanger configured to perform heat exchange between boil off gas compressed in the boil-off gas compressor and boil-off gas introduced into the boil-off gas compressor; a decompression valve configured to decompress the boil-off gas compressed in the boil-off gas compressor and then heat-exchanged in the boil-off gas heat exchanger; and a gas-liquid separator configured to perform gas-liquid separation on the boil-off gas decompressed in the decompression valve, wherein lubricant used in the boil-off gas compressor of a high pressure stage is mixed with boil-off gas to be introduced into the boil-off gas heat exchanger, wherein the boil-off gas reliquefaction system further includes a high-temperature boil-off gas transfer line configured to transfer high-temperature boil-off gas discharged from the boil-off gas heat exchanger to a low pressure consumer upstream of the decompression valve, when high-pressure boil-off gas compressed in the boil-off gas compressor is injected into the boil-off gas heat exchanger to remove the lubricant introduced into the boil-off gas heat exchanger.

Specifically, the boil-off gas reliquefaction system may further include: a boil-off gas bypass line configured to allow boil-off gas discharged from the liquefied gas storage tank to be transferred to the boil-off gas compressor by bypassing the boil-off gas heat exchanger; and a boil-off bypass valve configured to control flow of the boil-off gas bypass line. The boil-off gas bypass valve may allow low-temperature boil-off gas discharged from the liquefied gas storage tank to flow into the boil-off gas bypass line such that boil-off gas injected into the boil-off gas heat exchanger maintains a high temperature state, when high-pressure boil-off gas compressed in the boil-off gas compressor is injected into the boil-off gas heat exchanger to remove the lubricant introduced into the boil-off gas heat exchanger.

Specifically, the boil-off gas reliquefaction system may further include: a boil-off gas supply line connected to the consumer via the boil-off gas compressor from the liquefied gas storage tank; and a boil-off gas return line branching off downstream of the boil-off gas compressor on the liquefied gas storage tank to be connected to the liquefied gas storage tank via the boil-off gas heat exchanger, the decompression valve, and the gas-liquid separator.

Specifically, the high-temperature boil-off gas transfer line may branch off upstream of the decompression valve on the boil-off gas return line to be connected to the low pressure consumer.

Specifically, the boil-off gas reliquefaction system may further include: a low-pressure boil-off gas supply line configured to supply boil-off gas compressed in the boil-off gas compressor of a low pressure stage to the low pressure consumer; and a low-pressure boil-off gas return line branching off on the low-pressure boil-off gas supply line to inject high-temperature boil-off gas into the boil-off gas heat exchanger.

Specifically, the boil-off gas reliquefaction system may further include a low-pressure boil-off gas supply valve configured to control flow of the low-pressure boil-off gas supply line. The low-pressure boil-off gas supply valve may be closed when high-pressure boil-off gas compressed in the boil-off gas compressor of the low pressure stage is injected into the boil-off gas heat exchanger to remove the lubricant introduced into the boil-off gas heat exchanger.

Specifically, the high-temperature boil-off gas transfer line may be connected downstream of the low-pressure boil-off gas supply valve on the low-pressure boil-off gas supply line.

In accordance with another aspect of the present invention, there is provided a ship including the boil-off gas reliquefaction system.

### ADVANTAGEOUS EFFECTS

In the boil-off reliquefaction system and the ship in accordance with the present invention, lubricant used in a boil-off gas compressor of a high pressure stage is effectively removed to prevent interference with the flow of boil-off gas when the lubricant is introduced into a boil-off gas heat exchanger, etc. in a process of compressing the boil-off gas at high pressure to be decompressed and liquefied, so that reliquefaction efficiency can be ensured.

### BRIEF DESCRIPTION OF THE DRAWINGS

FIG. 1 is a side view of a ship having a boil-off gas reliquefaction system in accordance with the present invention.
FIG. 2 is a conceptual view of a boil-off gas reliquefaction system not being part of the claimed invention.
FIG. 3 is a sectional view of a gas-liquid separator of the boil-off gas reliquefaction system in accordance with the first embodiment of the present invention.
FIG. 4 is a sectional view of a gas-liquid separator of a boil-off gas reliquefaction system in accordance with a second embodiment of the present invention.
FIG. 5 is a sectional view of a gas-liquid separator of a boil-off gas reliquefaction system in accordance with a third embodiment of the present invention.
FIG. 6 is a sectional view of a gas-liquid separator of a boil-off gas reliquefaction system in accordance with a fourth embodiment of the present invention.
FIG. 7 is a conceptual view of a boil-off gas reliquefaction system not being part of the claimed invention.
FIG. 8 is a conceptual view of a boil-off gas reliquefaction system in accordance with a sixth embodiment of the present invention.
FIG. 9 is a conceptual view of a boil-off gas reliquefaction system not being part of the claimed invention.
FIG. 10 is a conceptual view of a boil-off gas reliquefaction system not being part of the claimed invention.
FIG. 11 is a conceptual view of a boil-off gas reliquefaction system in accordance with a ninth embodiment of the present invention.
FIG. 12 is a conceptual view of the boil-off gas reliquefaction system in accordance with the ninth embodiment of the present invention.
FIG. 13 is a conceptual view of the boil-off reliquefaction system not being part of the claimed invention.
FIG. 14 is a conceptual view of a gas treatment system not being part of the claimed invention.
FIG. 15 is a graph illustrating a gas treatment state of the gas treatment system in accordance with the present invention.

### MODE FOR THE INVENTION

Other objects, specific advantages, and new features of the present invention will be more apparent from preferable embodiments and the following detailed description associated with the accompanying drawings. In the specification, when reference numerals are endowed to components in each drawing, it should be noted that like reference numerals denote like elements even though they are depicted in several drawings. Further, in the following description of the present invention, a detailed explanation of known related technologies may be omitted to avoid unnecessarily obscuring the subject matter of the present invention.

Hereinafter, liquefied gas is a substance which is in a vapor state at room temperature since the liquefied gas has a boiling point lower than the room temperature, and may be LPG, LNG, ethane, etc. For example, the liquefied gas may mean Liquefied Natural Gas (LNG). Also, boil-off gas may mean Boil-Off Gas (BOG) as naturally vaporized liquefied gas. In addition, it is noted that current state (gas, liquid, etc.) of the liquefied gas and the boil-off gas are not limited due to their names. For example, the boil-off gas may be in a liquid state through reliquefaction.

Hereinafter, exemplary embodiments of the present invention will be described in detail with reference to the accompanying drawings.

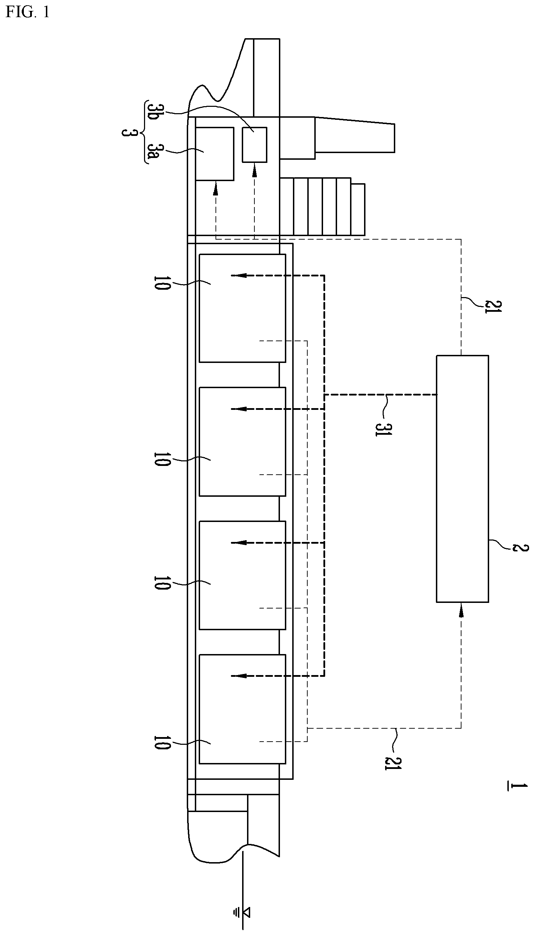

FIG. 1 is a side view of a ship having a boil-off gas reliquefaction system in accordance with the present invention.

Referring to FIG. 1, the ship 1 to which the boil-off gas reliquefaction system 2 is applied in accordance with the present invention may be a liquefied gas carrier equipped with a plurality of liquefied gas storage tanks 10 in a length direction in a body thereof. For example, the ship 1 may be an LNG carrier.

The liquefied gas storage tank 10 provided in the body of the ship 1 stores liquefied gas. The liquefied gas storage tank 10 may liquefy gas having a boiling point lower than room temperature and store the liquefied gas in an extremely low temperature state.

The liquefied gas storage tank 10 is of a type such as a membrane type, an independent type, or a pressure container type, but the present invention is not particularly limited. However, boil-off gas is generated when a portion of the liquefied gas is naturally vaporized in the liquefied gas storage tank 10, regardless of type. The boil-off gas increases an internal pressure of the liquefied gas storage tank 10, which may be problematic.

Therefore, in this embodiment, the boil-off gas may be discharged to the outside of the liquefied gas storage tank 10 according to the internal pressure of the liquefied gas storage tank 10, and the discharged boil-off gas may be reliquefied to return to the liquefied gas storage tank 10.

Alternatively, in the present invention, the boil-off gas may be used as a fuel of a consumer 3. The consumer 3 may be provided in the ship 1. For example, the consumer 3 may be a high pressure engine 3a (ME-GI engine, XDF engine, etc.) for propelling the ship 1, a low pressure engine 3b (DFDE generator engine) for covering a power load in the ship 1, and/or a gas combustion apparatus 3c (GCU).

However, in this specification, it is noted that the consumer 3 restrictively represents a high pressure consumer 3 such as the high pressure engine 3a except a low pressure consumer 3 such as the low pressure engine 3b or the gas combustion apparatus 3c.

It will be apparent that liquefied gas may also be used as a fuel of the consumer 3, in addition to the boil-off gas generated in the liquefied gas storage tank 10. To this end, components known in the art, which are necessary for liquefied gas supply, such as a forcible vaporizer (not shown), a heavy carbon separator (not shown), and a high pressure pump (not shown), may be provided between the liquefied gas storage tank 10 and the consumer 3.

A cabin (reference numeral not designated), an engine casing (reference numeral not designated), and the like may be provided on an upper deck of the ship 1, and components of the boil-off gas reliquefaction system 2 may also be provided on the upper deck. However, the installation positions of various components constituting the boil-off gas reliquefaction system 2 are not particularly limited.

It is note that the ship 1 in accordance with the present invention is an expression including various types of offshore plants capable of storing liquefied gas, such as FPSO and FSRU, in addition to the liquefied gas carrier.

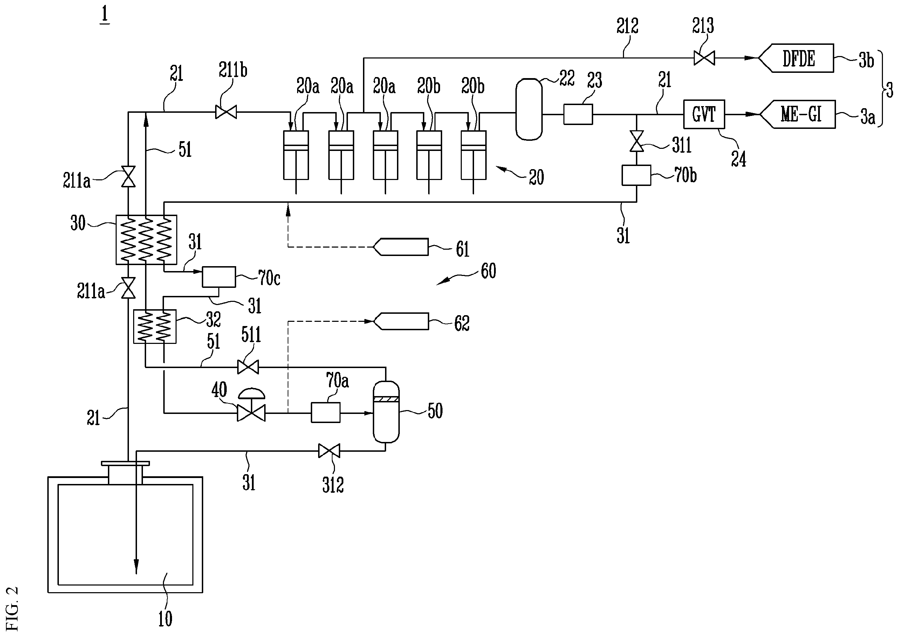

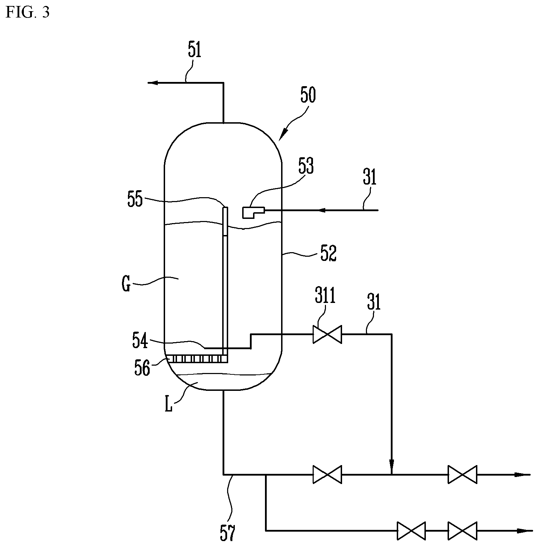

FIG. 2 is a conceptual view of a boil-off gas reliquefaction system not being part of the claimed invention. FIG. 3 is a sectional view of a gas-liquid separator of the boil-off gas reliquefaction system in accordance with the first embodiment of the present invention.

Referring to FIGS. 2 and 3, the boil-off gas reliquefaction system 2 in accordance with the first embodiment of the present invention includes a boil-off gas compressor 20, a boil-off gas heat exchanger 30, a decompression valve 40, a gas-liquid separator 50, a lubricant treatment unit 60, and lubricant filters 70a, 70b, and 70c.

The boil-off compressor 20 compresses, in multi-stages, boil-off gas generated in the liquefied gas storage tank 10, and supplies the compressed boil-off gas to the consumer 3. The boil-off gas compressor 20 may be of a centrifugal type, a reciprocating type, a screw type, etc., and a plurality of boil-off gas compressors may be provided in series to compress, in multi-stages, boil-off gas and then change the compressed boil-off gas into a high pressure gas. Also, in the boil-off gas compressor 20, a plurality of boil-off gas compressors may be provided in parallel so as to achieve backup or load sharing.

The boil-off compressor 20 may compress boil-off gas discharged at 1 bar or so from the liquefied gas storage tank 10 at 200 bar or more (e.g., 200 to 400 bar) which is a high pressure. To this end, the boil-off gas compressor 20 may be provided, for example, in five stages.

The five-stage boil-off gas compressor 20 may be classified into low-pressure-stage boil-off gas compressors 20a and high-pressure-stage boil-off gas compressors 20b. First to third stages among the five stages may be the low-pressure-stage boil-off gas compressors 20a, and fourth and fifth stages among the five stages may be the high-pressure-stage boil-off gas compressors 20b.

The reference for classifying the low-pressure-stage boil-off gas compressors 20a and the high-pressure-stage boil-off gas compressors 20b is based on whether lubricant L is mixed with boil-off gas. In the case of the low-pressure-stage boil-off gas compressors 20a, the lubricant L used when the boil-off gas compressor 20 is driven in a process of compressing boil-off gas is not introduced to the boil-off gas. On the other hand, in the case of the high-pressure-stage boil-off gas compressors 20b, the lubricant L used to drive boil-off gas compressor 20 may be introduced to the boil-off gas as the boil-off gas is compressed at high pressure.

Therefore, while boil-off gas compressed up to the third stage in the five-stage boil-off compressor 20 is in a state in which the lubricant is not mixed with the boil-off gas, boil-off gas compressed up to the fourth stage or more is in a state in which the lubricant is mixed with the boil-off gas, which results in a quality problem. To solve this, the present invention includes various components which will be described later.

A boil-off gas supply line 21 is provided from the liquefied gas storage tank10 to the consumer 3. Boil-off gas supply valves 211a and 211b and the boil-off gas compressor 20 are disposed on the boil-off gas supply line 21, and boil-off gas is discharged from the liquefied gas storage tank 10 to be transferred to the consumer 3 via the boil-off gas compressor 20.

However, surplus boil-off gas which is not consumed by the consumer 3 may be generated. The surplus boil-off gas may be liquefied to return to the liquefied gas storage tank 10. To this end, a boil-off gas return line 31 may branch off downstream of the boil-off gas compressor 20 on the boil-off gas supply line 21.

The flow of boil-off gas from the boil-off gas supply line 21 to the boil-off gas return line 31 may be controlled by a high-pressure boil-off gas return valve 311 provided on the boil-off gas return line 31 and/or the boil-off gas supply line 21.

A separator 22, a coalescer 23, and the like, which filter liquid or unnecessary substances to be supplied to the customer 3 from boil-off gas, may be provided downstream of the boil-off gas compressor 20 on the boil-off gas supply line 21, and a gas valve train 24 and the like, which control the flow rate of boil-off gas, may be provided upstream of the customer 3 on the boil-off gas supply line 21.

A low pressure boil-off gas supply line 212 may branch off upstream of the high-pressure-stage boil-off gas compressors 20b on the boil-off gas supply line 21. For example, the low pressure boil-off gas supply line 212 may be connected downstream of the second stage among the low-pressure-stage boil-off gas compressors 20a, and be connected to a low pressure consumer 3.

The consumer 3 connected to the boil-off gas supply line 21 may be a high pressure consumer 3, and the consumer 3 connected to the low pressure boil-off supply line 212 may be the low pressure consumer 3. In addition, the high pressure consumer 3 may be a thruster engine, and the low pressure consumer 3 may be a generator engine, etc. The boil-off gas supply line 21 may be referred to as a main stream, and the low pressure boil-off gas supply line 212 may be referred to as a side stream.

The low pressure customer 3 may be a DFDE low pressure engine 3b as shown in the drawings, a gas combustion apparatus 3c for burning boil-off gas, or the like. The pressure of boil-off gas required by the low pressure consumer 3 may be 10 bar or so.

A low pressure boil-off gas supply valve 213 for controlling the flow of boil-off gas identically/similarly to the boil-off gas supply valves 211a and 211b provided on the boil-off gas supply line 21 may be provided on the low pressure boil-off gas supply line 212.

The boil-off gas heat exchanger 30 performs heat exchange between boil-off gas compressed in the boil-off gas compressor 20 and boil-off gas introduced into the boil-off gas compressor 20. The above-described boil-off gas return line 31 may branch off downstream of the boil-off gas compressor 20 to be connected to the liquefied gas storage tank 10 via the boil-off gas heat exchanger 30, etc. In addition, the boil-off gas supply line 21 may also be connected to the consumer 3 sequentially via the boil-off gas heat exchanger 30 and the boil-off gas compressor 20 from the liquefied gas storage tank 10.

Therefore, the boil-off gas heat exchanger 30 may be provided with a flow path (reference numeral not shown) which is parallel to the boil-off gas supply line 21 and has low-pressure/low-temperature boil-off gas flowing therethrough and a flow path (reference numeral not shown) which is parallel to the boil-off gas return line 31 and has high-pressure/high-temperature boil-off gas flowing therethrough. Moreover, the boil-off gas heat exchanger 30 may be provided with a flow path (reference numeral now shown) which is parallel to a vapor-phase boil-off gas transfer line 51 which will be described later and has low-pressure/low-temperature vapor-phase boil-off gas (flash gas) flowing therethrough.

The boil-off gas heat exchanger 30 may cool high-temperature boil-off gas which is compressed in the boil-off gas compressor 20 and then introduced along the boil-off gas return line 31 as low-temperature boil-off gas discharged from the liquefied gas storage tank 10. Since the boil-off gas flowing along the boil-off gas return line 31 is to be liquefied and then return to the liquefied gas storage tank 10, the boil-off gas heat exchanger 30 can increase liquefaction efficiency by performing precooling before the boil-off gas is liquefied.

However, the lubricant L may be mixed with boil-off gas compressed in the high-pressure-stage boil-off gas compressor 20b. The boil-off gas mixed with the lubricant L may be introduced into the boil-off gas heat exchanger 30 along the boil-off return line 31.

The lubricant L is a substance having a boiling point considerably higher than that of the boil-off gas, and may be in a liquid state at room temperature. The lubricant L may be sufficiently solidified through slight cooling, and have high viscosity.

There is no problem when flow is continuously made in the flow path of the boil-off heat exchanger 30. However, when the flow in the boil-off gas heat exchanger 30 is reduced due to no generation of surplus boil-off gas, etc., the lubricant L is caught in the flow path of the boil-off gas heat exchanger 30, and therefore, the flow may be interfered.

Therefore, in the present invention, the lubricant L may be melted and pushed using high-temperature gas, etc. so as to solve the problem in that the flow of boil-off gas is interfered since the lubricant L is caught in the boil-off gas heat exchanger 30 and components provided downstream of the boil-off gas heat exchanger 30. This will be described later.

In this embodiment, an auxiliary boil-off gas heat exchanger 32 is provided. The auxiliary boil-off gas heat exchanger 32 may cool high-pressure boil-off gas cooled by the boil-off gas heat exchanger 30 as vapor-phase boil-off gas discharged from the gas-liquid separator 50.

To this end, the auxiliary boil-off gas heat exchanger 32 may be provided in a structure having a flow path (reference numeral not shown) connected downstream of the boil-off gas heat exchanger 30 on the boil-off gas return line 31 and a flow path (reference numeral not shown) connected upstream of the boil-off gas heat exchanger 30 on the vapor-phase boil-off gas transfer line 51 which will be described later. However, any flow path through which boil-off gas discharged from the liquefied gas storage tank 10 to be transferred to the boil-off gas compressor 20 flows may not exist in the auxiliary boil-off gas heat exchanger 32.

The auxiliary boil-off gas heat exchanger 32 may additionally cool, as vapor-phase boil-off gas, high-pressure boil-off gas cooled by the vapor-phase boil-off gas in the boil-off gas heat exchanger 30. That is, the high-pressure boil-off gas which is compressed in the boil-off gas compressor and flows along the boil-off gas return line 31 may be primarily cooled by low-temperature boil-off gas discharged from the liquefied gas storage tank 10 and vapor-phase boil-off gas transferred from the auxiliary boil-off gas heat exchanger 32 in the boil-off gas heat exchanger 30, and then secondarily cooled by vapor-phase boil-off gas transferred from the gas-liquid separator 50 in the auxiliary boil-off gas heat exchanger 32.

The auxiliary boil-off gas heat exchanger 32 may omitted, and the boil-off gas heat exchanger 30 and the auxiliary boil-off gas heat exchanger 32 may be integrally provided. That is, the boil-off gas heat exchanger 30 may have a form in which the boil-off gas heat exchanger 30 includes the auxiliary boil-off gas heat exchanger 32 therein because of an internal flow path structure thereof.

The decompression valve 40 decompresses boil-off gas which is compressed in the boil-off gas compressor 20 and then heat-exchanged by boil-off gas heat exchanger 30. In the present invention, the decompression valve 40 may be a Joule-Thomson valve, but it is noted that the decompression valve 40 may be replaced with various means capable of decreasing pressure, such as an expander.

Boil-off gas may be compressed at 50 bar or so by the low-pressure-stage boil-off compressors 20a, compressed at 200 bar or more by the high-pressure-stage boil-off compressors 20b, and then cooled in the boil-off gas heat exchanger 30. However, although the boil-off gas has been compressed at high pressure to have an increased boiling point, the boil-off gas is not sufficiently liquefied through the cooling in the boil-off gas heat exchanger 30.

Therefore, the present invention may use an effect that temperature is decreased in decompression using the decompression valve 40. The decompression valve 40 may decompress high-pressure boil-off gas of 200 bar or more to 1 bar or so, which is similar to the internal pressure of the liquefied storage tank 10, and the temperature of the boil-off gas in the decompression may be decreased to the boiling point or less.

The decompression valve 40 is provided on the boil-off gas return line 31, and a plurality of decompression valves may be provided in series on the boil-off gas return line 31, unlike the drawings. Alternatively, a modification in which a Joule-Thomson valve and an expander are provided in series is possible.

The gas-liquid separator 50 gas-liquid separates boil-off gas decompressed in the decompression valve 50. The boil-off gas may be liquefied while being cooled in the boil-off gas heat exchanger 50 and being decompressed in the decompression valve 40. However, reliquefaction may not be completely made depending on a situation, and some substances such as nitrogen which is included in the boil-off gas and has a very low boiling point are not liquefied and may remain.

Gas-liquid boil-off gas remaining in a vapor state may be separated from the gas-liquid separator 50 not to be introduced into the liquefied gas storage tank 10, liquid-phase boil-off gas G in a liquid state returns to the liquefied gas storage tank 10 along the boil-off return line 31 connected to the liquefied gas storage tank 10 via the gas-liquid separator 50. A liquid-phase boil-off gas return valve 312 may be provided on the boil-off gas return line 31 between the gas-liquid separator 50 and the liquefied gas storage tank 10.

The gas-liquid separator 50 may return the liquid-phase boil-off gas G to the liquefied gas storage tank 10, and transfer the vapor-phase boil-off gas to the boil-off gas heat exchanger 30. Since the vapor-phase boil-off gas transferred from the gas-liquid separator 50 to the boil-off gas heat exchanger 30 is gas cooled by decompression of the decompression valve 40, the vapor-phase boil-off gas may be used to cool high-pressure boil-off gas compressed in the boil-off gas compressor 20 to be introduced into the boil-off gas heat exchanger 30.

Also, the gas-liquid separator 50 may transfer the vapor-phase boil-off gas to the boil-off gas compressor 20 via the boil-off gas heat exchanger 30. To this end, the vapor-phase boil-off gas transfer line 51 is provided to the gas-liquid separator 50. The vapor-phase boil-off gas transfer line 51 may be connected to the boil-off gas supply line 21 via the boil-off gas heat exchanger 30 from the gas-liquid separator 50, and a vapor-phase boil-off gas transfer valve 511 for controlling the flow of vapor-phase boil-off gas upstream and/or downstream of the boil-off gas heat exchanger 30 may be provided on the vapor-phase boil-off gas transfer line 51.

The point at which the vapor-phase boil-off gas transfer valve 511 is connected to the boil-off gas supply line 21 is a point upstream of the boil-off gas compressor 20, and the boil-off gas compressor 20 is additionally supplied with vapor-phase boil-off gas in addition to boil-off gas discharged from the liquefied gas storage tank 10. Thus, driving is ensured to a certain degree or more, so that efficiency can be improved.

As described above, the lubricant L used in the high-pressure-stage boil-off gas compressors 20b may be mixed with boil-off gas. The gas-liquid separator 50 prevents the lubricant L from being mixed with boil-off gas returning to the liquefied gas storage tank 10, so that the quality of liquefied gas stored in the liquefied gas storage tank 10 can be prevented from being deteriorated.

As shown in FIG. 3 in relation to this, the gas-liquid separator 50 includes a housing 52, a boil-off gas inlet 53, a liquid-phase boil-off gas outlet 54, a weir 55, a lubricant blocking plate 56, and a lubricant drain line 57.

The housing 52 stores boil-off gas decompressed in the decompression valve 40. The housing 52 may have a cylindrical shape as shown in the drawing, but the shape of the housing 52 is not particularly limited.

However, the housing 52 is to allow boil-off gas not to be vaporized while storing low-pressure/low-temperature boil-off gas liquefied through decompression. Therefore, the housing 52 may be provided with a heat insulating equipment for blocking penetration of heat from the outside.

The housing 52 may be provided on the boil-off gas return line 31, and the boil-off gas return line 31 may be connected through an internal space of the housing 52 between the boil-off gas inlet 53 and the liquid-phase boil-off gas outlet 54, which will be described below.

The boil-off gas inlet 53 allows boil-off gas to be introduced into the housing 52. The boil-off gas inlet 53 may be provided at one end of the boil-off gas return line 31 connected to the gas-liquid separator 50 from the decompression valve 40, and be a half open inlet having an open lower side. This is for the purpose of preventing low-pressure/low-temperature boil-off gas from being scattered when the boil-off gas is introduced into the housing 52.

The boil-off gas inlet 53 may be provided upwardly of the liquid level of boil-off gas stored in the housing 52. However, the boil-off gas inlet 53 may be provided lower than an upper end of the weir 55. Therefore, boil-off gas introduced through the boil-off gas inlet 53 may be mixed with liquid-phase boil-off gas stored in the housing 52.

The liquid-phase boil-off gas outlet 54 discharges the liquid-phase boil-off gas in the housing 52. The liquid-phase boil-off gas outlet 54 may be provided at one end of the boil-off gas return line 31 connected to the liquefied gas storage tank 10 from the gas-liquid separator 50.

The liquid-phase boil-off gas outlet 54 may be provided downwardly of the liquid level of boil-off gas stored in the housing 52, and be provided upwardly of the lubricant blocking plate 56.

Boil-off gas at a certain liquid level or more in boil-off gas introduced into the housing 52 through the boil-off gas inlet 53 passes over an upper side of the weir 55. The liquid-phase boil-off gas outlet 54 may allow the liquid-phase boil-off gas G passing over the upper side of the weir 55 to be discharged to the boil-off gas return line 31. To this end, the liquid-phase boil-off gas outlet 54 and the boil-off gas inlet 53 are provided at sides opposite to each other with respect to the weir 55.

In addition, the lubricant blocking plate 56 may be provided in a horizontal direction at a lower side of the weir 55, and a space between the lower side of the weir 55 and a bottom surface of the housing 52 may be open. The liquid-phase boil-off outlet 54 may allow the liquid-phase boil-off gas G which passes over the lower side of the weir 55 from the boil-off gas inlet 53 and then passes upwardly through the lubricant blocking plate 56 to be discharged to the boil-off gas return line 31.

That is, the liquid-phase boil-off gas outlet 54 may discharge the liquid-phase boil-off gas G which does not pass through the lubricant blocking plate 56 but passes through the weir 55, or discharge the liquid-phase boil-off gas G passing through the lubricant blocking plate 56.

Since the lubricant L in the low-pressure/low temperature boil-off gas decompressed in the decompression valve to be introduced into the housing 52 is in a liquid or solid state and has a density greater than that of the boil-off gas, the lubricant L does not pass over the upper side of the weir 55 and sinks downwardly, even when the lubricant L is mixed with the boil-off gas to be introduced into the housing 52 through the boil-off gas inlet 53. Also, the lubricant L is blocked by the lubricant block plate 56, even when the lubricant L passes over the lower side of the weir 55.

Therefore, the lubricant L may be removed from the boil-off gas discharged to the liquid-phase boil-off outlet 54, unlike the boil-off gas introduced into the boil-off gas inlet 53.

The weir 55 is provided between the boil-off gas inlet 53 and the liquid-phase boil-off gas outlet 54. The weir 55 may be provided in a vertical direction in the housing 52, and have a shape that allows boil-off gas to pass over an upper side thereof. However, since the weir 55 has a sufficient height, the lubricant L mixed with the boil-off gas does not pass over the upper side of the weir 55.

The lubricant blocking plate 56 is provided to filter the lubricant L between introduction of the boil-off gas and discharge of the liquid-phase boil-off gas G. Specifically, the lubricant blocking plate 56 is provided in the horizontal direction at the lower side of the weir 55, to suppress introduction of the lubricant L into the liquid-phase boil-off gas output 54.

The lubricant blocking plate 56 may be provided in the shape of a perforated plate having holes smaller than particles of the lubricant L, to suppress passing of the lubricant L and allow passing of the liquid-phase boil-off gas G. However, the liquid-phase boil-off gas outlet 54 provided upwardly of the lubricant blocking plate 56 may be provided at a position upwardly spaced apart from the lubricant blocking plate 56.

This is for the purpose of preventing a portion of the lubricant L from being discharged through the liquid-phase boil-off gas outlet 54 while floating when the ship 1 provided with the gas-liquid separator 50 is inclined by an external force, etc.

The lubricant drain line 57 discharges the lubricant L collected on the bottom of the housing 52 to the outside. A space between the lower side of the weir 55 and the bottom of the housing 52 may have an open shape (a baffle (not shown) provided in a lattice form may be provided). The lubricant t L mixed with the boil-off gas is naturally gathered on the bottom of the housing 52 by gravity.

However, the lubricant drain line 57 may maintain a closed state by a drain valve (reference numeral not shown). When maintenance is required, the lubricant drain line 57 may discharge the lubricant L to the outside, thereby checking efficiency of removal of the lubricant L.

The lubricant drain line 57 may be connected to the boil-off gas return line 31. When filter efficiency is verified in the high-pressure-stage boil-off gas compressors 20b, when the lubricant L is sufficiently filtered in the separator 22 or the coalescer 23, or the like, the lubricant drain line 57 may be open toward the boil-off gas return line 31.

The lubricant treatment unit 60 treats the lubricant L introduced into the boil-off gas heat exchanger 30 by injecting high-temperature gas to push the lubricant L downstream of the boil-off gas heat exchanger 30. As described above, the lubricant L used in the high-pressure-stage boil-off gas compressors 20b may be mixed with boil-off gas to be introduced into the boil-off gas heat exchanger 30. In the present invention, injection of high-temperature gas may be used to remove the lubricant L caught in the boil-off gas heat exchanger 30, in addition to that the lubricant L is removed using an internal structure of the gas-liquid separator 50.

The lubricant treatment unit 60 may inject high-temperature gas, e.g., nitrogen gas of 40 Celsius degrees or more into the boil-off gas heat exchanger 30. The high-temperature gas injected into the boil-off gas heat exchanger 30 may allow the lubricant L introduced into the boil-off gas heat exchanger 30 to be discharged by heating the lubricant L.

When the flow of the boil-off gas is continuously made in the boil-off gas heat exchanger 30, it is less likely that the lubricant L will remain in the boil-off gas heat exchanger 30. However, when surplus boil-off gas is not generated, a portion of the lubricant L mixed with the boil-off gas may remain in the boil-off gas heat exchanger 30. The lubricant L becomes solid when the lubricant L is further cooled by low-temperature boil-off gas discharged from the liquefied gas storage tank 10. Therefore, the lubricant L may be caught in the boil-off gas heat exchanger 30, and interfere with the flow of the boil-off gas.

Accordingly, in this embodiment, the lubricant L is heated by injecting the high-temperature gas into the boil-off gas heat exchanger 30, using the lubricant treatment unit 60, and the lubricant L is forcibly pushed as the viscosity of the lubricant L is decreased, so that the flow of the boil-off gas in the boil-off gas heat exchanger 30 can be prevented from being deteriorated.

The lubricant treatment unit 60 may inject high-temperature gas upstream of the boil-off gas heat exchanger 30 on the boil-off gas return line 31, and allow the high-temperature gas mixed with the lubricant L to be discharged downstream of the decompression valve 40 on the boil-off gas return line 31.

To this end, the lubricant treatment unit 60 includes a high-temperature gas injection part 61 and a high-temperature gas discharge part 62. The high-temperature gas injection part is connected upstream of the boil-off gas heat exchanger 30 on the boil-off gas return line 31 to inject high-temperature gas.

The injection of the high-temperature gas may be made while boil-off gas does not flow in the boil-off gas return line 31. This is because, when the boil-off gas flows in the boil-off gas return line 31, the removal effect of the lubricant L may be reduced at the same time when the liquefaction efficiency of the boil-off gas is deteriorated in the injection of the high-temperature gas, and the boil-off gas may be discharged when the high-temperature gas is discharged.

When the high-temperature gas is introduced into the boil-off gas heat exchanger 30 through the boil-off gas return line 31, the viscosity of the lubricant L may be decreased while the lubricant L remaining in the boil-off gas heat exchanger 30 is being heated, and then the lubricant L may be discharged together with the high-temperature gas from the boil-off heat exchanger 30.

The high-temperature gas injection part 61 may push the boil-off gas in the boil-off gas heat exchanger 30 by preferentially supplying inert gas (e.g., nitrogen gas, etc.) before the high-temperature gas (e.g., nitrogen gas of 40 Celsius degrees or more). The reason why the boil-off gas is pushed is that explosive boil-off gas is prevented from being mixed with the high-temperature gas discharged together with the lubricant L hereafter.

The high-temperature discharge part 62 branches off upstream and/or downstream of the decompression valve 40 on the boil-off gas return line 31 to discharge the high-temperature gas mixed with the lubricant L. The lubricant L discharged to the outside through the high-temperature gas may be recycled, and the high-temperature gas may also be recycled, to be injected into the boil-off gas heat exchanger 30 through the high-temperature gas injection part 61.

For example, the lubricant treatment unit 60 may use a method of filtering the lubricant L from the high-temperature gas mixed with the lubricant L, which is discharged from the high-temperature gas discharge part 62, again heating the high-temperature gas, and then re-injecting the heated high-temperature gas into the boil-off gas heat exchanger 30.

Also, the lubricant treatment unit 60 may heat nitrogen gas, etc., which is generated from an inert gas generator (IG generator), a nitrogen generator, or the like, which is frequently provided in the ship 1, to be used as the high-temperature gas, so that any separate high-temperature gas is not generated.

The lubricant filters 70a, 70b, and 70c filter the lubricant L. The lubricant filter 70a may be provided between the decompression valve 40 and the gas-liquid separator 50 on the boil-off gas return line 31. For example, the lubricant filter 70a may be provided between the high-temperature gas discharge part 62 and the gas-liquid separator 50 on the boil-off gas return line 31, and prevent the lubricant L which is not yet discharged from the high-temperature gas discharge part 62 from being introduced into the liquefied gas storage tank 10 or being introduced into the boil-off gas heat exchanger 30 through the vapor-phase boil-off gas transfer line 51.

The above-described lubricant filter 70a may be a liquid-phase filter, and be provided to remove the liquid-phase lubricant L.

In addition, the lubricant filter 70b may be provided upstream of the boil-off gas heat exchanger 30 on the boil-off gas return line 31. The lubricant filter 70b may be a vapor-phase filter, and remove the lubricant L which may be heated at high pressure to be in a supercritical state.

The lubricant filter 70b provided upstream of the boil-off gas heat exchanger 30 on the boil-off gas return line 31 may be an absorption tower capable of absorbing the lubricant L. Alternatively, the lubricant filter 70b may be a cyclone separator, etc., which vertically separates the boil-off gas and the lubricant L from each other by using a density difference between the boil-off gas and the lubricant L. That is, in the present invention, the lubricant filters 70a, 70b, and 70c are not limited to a general filter form, and may include all forms capable of filtering the lubricant L from the boil-off gas.

The lubricant filter 70c may be provided between the boil-off gas heat exchanger 30 and the auxiliary boil-off gas heat exchanger 32 on the boil-off gas return line 31. The lubricant filter 70c may be a liquid-phase filter.

Alternatively, the lubricant filter 70c may be a liquid-phase separator provided between the boil-off gas heat exchanger 30 and the auxiliary boil-off gas heat exchanger 32 on the boil-off gas return line 31. The liquid-phase separator is a component for separating the boil-off gas and the lubricant L from each other by using a density difference between the boil-off gas and the lubricant L. Like the above-described gas-liquid separator 50, the liquid-phase separator may have a space accommodating the boil-off gas and provide a partition wall (not shown) in the space, to separate the lubricant L.

Several kinds of the lubricant filters 70a, 70b, and 70c described above may be selectively provided or be provided by combining the same. For example, a vapor-phase filter may be provided upstream of the boil-off gas heat exchanger 30 on the boil-off gas return line 31, and a liquid-phase filter may be provided between the boil-off gas heat exchanger 30 and the auxiliary boil-off gas heat exchanger 32, thereby filtering the lubricant in two stages.

As described above, in this embodiment, the gas-liquid separator 50 has a structure for filtering the lubricant L, and the lubricant L is removed by forcibly injecting the high-temperature gas into the boil-off gas heat exchanger 30 when the lubricant L is caught in the boil-off gas heat exchanger 30, so that the storage quality of the liquefied gas storage tank 10 is prevented from being deteriorated even when the lubricant L is mixed with the boil-off gas in the high-pressure-stage boil-off gas compressors 20b.

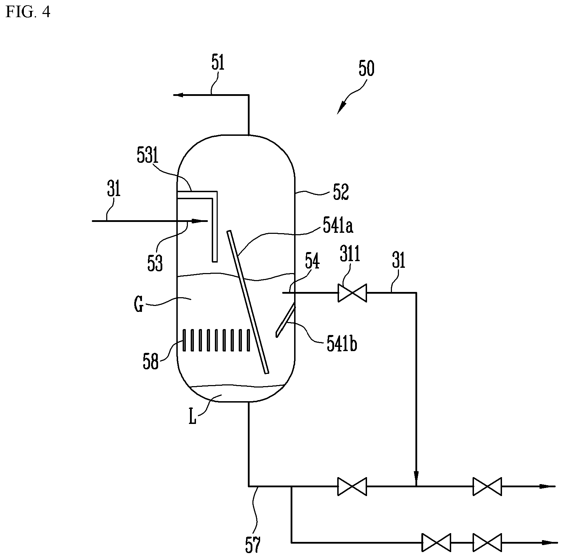

FIG. 4 is a sectional view of a gas-liquid separator of a boil-off gas reliquefaction system in accordance with a second embodiment of the present invention.

Referring to FIG. 4, the boil-off gas reliquefaction system 2 in accordance with the second embodiment of the present invention is different from the first embodiment in the structure of the gas-liquid separator. Hereinafter, only characteristic portions different from the first embodiment are described, and portions in which a description is omitted follow a description of the first embodiment. This is equally applied to other embodiments described below.

In this embodiment, the gas-liquid separator 50 may include an inlet-side partition wall 53, outlet-side inclined walls 541a and 541b, and a baffle 58, in replacement of the weir 55 and the lubricant blocking plate 58 in the housing 52.

The inlet-side partition wall 531 is used to allow boil-off gas introduced through the boil-off gas inlet 53 not to be scattered but to be gathered downwardly. When the above-described half open inlet is used, the inlet-side partition wall 531 may be omitted.

At least two outlet-side inclined walls 541a and 541b may be provided. The outlet-side inclined walls 541a and 541b may form a v or y shape, and the middle of the shape may be open such that the boil-off gas passes therethrough. The outlet-side inclined walls 541a and 541b interferes with flow of the boil-off gas when the boil-off gas is discharged to the boil-off gas return line 31 through the liquid-phase boil-off gas outlet 54, so that the lubricant L is not introduced into the liquid-phase boil-off gas outlet 54 but falls to the bottom of the housing 52.

The baffle 58 may be provided downwardly of the boil-off gas inlet 53, and allow the lubricant L to be filtered from the boil-off gas which is bumped against the inlet-side partition wall 531 and then falls toward the bottom of the housing 52. The baffle 58 may be a straightener.

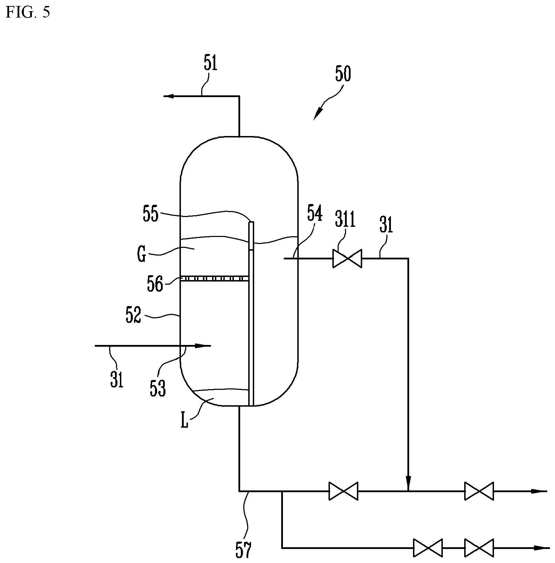

FIG. 5 is a sectional view of a gas-liquid separator of a boil-off gas reliquefaction system in accordance with a third embodiment of the present invention.

Referring to FIG. 5, unlike the first embodiment, in the gas-liquid separator 50 in accordance with the third embodiment of the present invention, the boil-off inlet 53 may be disposed lower than the liquid level of boil-off gas in the housing 52, and the lubricant blocking plate 56 may be provided upwardly of the boil-off gas inlet 53.

Therefore, in this embodiment, the lubricant L may be filtered while the boil-off gas introduced into the housing 52 is upwardly passing through the lubricant blocking plate 56. Subsequently, the boil-off gas from which the lubricant L is removed may be discharged to the outside of the housing 52 through the liquid-phase boil-off outlet 54 while passing over the weir 55.

In this embodiment, the lower side of the weir 55 is fixed to the bottom of the housing 52 such that the boil-off gas can be transferred to the liquid-phase boil-off gas outlet 54 via the lubricant blocking plate 56 and the weir 55. Thus, the flow of the boil-off gas through the lower side of the weir 55 is not allowed.

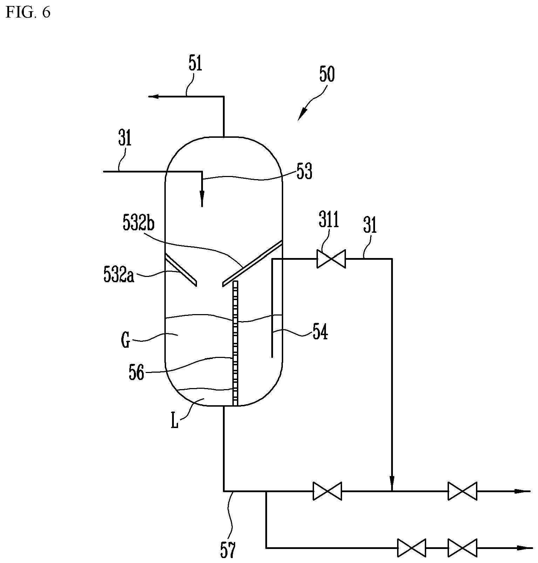

FIG. 6 is a sectional view of a gas-liquid separator of a boil-off gas reliquefaction system in accordance with a fourth embodiment of the present invention.

Referring to FIG. 6, the gas-liquid separator 50 in accordance with the fourth embodiment of the present invention may include inlet-side inclined walls 532a and 532b and a lubricant blocking plate 56.

The inlet-side inclined walls 532a and 532b may allow boil-off gas introduced from an upper side of the housing 52 through the boil-off gas inlet 53 to be collected downwardly. The inlet-side inclined walls 532a and 532b may form a v or y shape to implement a funnel function, and the boil-off gas transferred to the bottom of the housing 52 along the inlet-side inclined walls 532a and 532b may be introduced into the liquid-phase boil-off gas outlet 54 via the lubricant blocking plate 56 placed in a vertical direction.

Unlike the first embodiment, the lubricant blocking plate 56 may be provided in the vertical direction. The lubricant blocking plate 56 may be a perforated plate having holes with a size small enough to allow the lubricant L included in the boil-off gas not to pass therethrough.

Therefore, the boil-off gas introduced through the boil-off gas inlet 53 has a flow changed downwardly by the inlet-side inclined walls 532a and 532b, and then flows toward the bottom of the housing 52 through the inlet-side inclined walls 532a and 532b.

Subsequently, since the lubricant L included in the boil-off gas does not pass through the lubricant block plate 56, only the boil-off gas from which the lubricant L is separated may be discharged to the boil-off return gas 31 through the liquid-phase boil-off gas outlet 54.

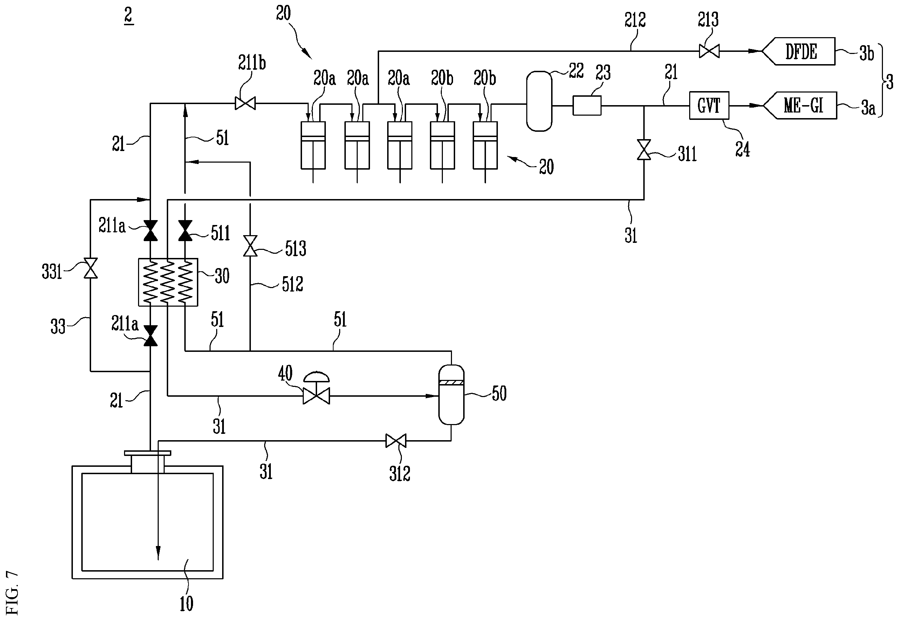

FIG. 7 is a conceptual view of a boil-off gas reliquefaction system not being part of the claimed invention.

Referring to FIG. 7, as compared with the above-described embodiment, the boil-off gas reliquefaction system 2 further includes a boil-off gas bypass line 33 and a vapor-phase boil-off gas bypass line 512. In FIG. 7, valves indicated in black represent that they are in a closed state.

The boil-off gas bypass line 33 allows boil-off gas discharged from the liquefied gas storage tank 10 to be transferred to the boil-off gas compressor 20 by bypassing the boil-off gas heat exchanger 30. A boil-off gas bypass valve 331 for controlling the flow of the boil-off gas bypass line 33 may be provided on the boil-off gas bypass line 33.

Unlike the first embodiment, separate high-temperature gas is not injected, but the lubricant L caught in the boil-off gas heat exchanger 30 may be heated and removed using high-temperature boil-off gas heated when the boil-off gas is compressed in the boil-off gas compressor 20.

However, when low-temperature boil-off gas discharged from the liquefied gas storage tank 10 when the high-temperature boil-off gas is introduced into the boil-off gas heat exchanger 30 is also introduced into the boil-off gas heat exchanger 30, the heating/removal of the lubricant L through the high-temperature boil-off gas may not be appropriately made.

Thus, the boil-off gas bypass line 33 allows the low-temperature boil-off gas discharged from the liquefied gas storage tank 10 not to be introduced into the boil-off gas heat exchanger 30 but to be supplied to the boil-off gas compressor 20. Accordingly, the high-temperature boil-off gas introduced into the boil-off gas heat exchanger 30 can effectively heat and remove the lubricant L.

The vapor-phase boil-off gas bypass line 512 allows vapor-phase boil-off gas discharged from the gas-liquid separator 50 to be transferred to the boil-off gas compressor 20 by bypassing the boil-off gas heat exchanger 30. A vapor-phase boil-off gas bypass valve 513 for controlling the flow of the vapor-phase boil-off gas bypass line 512 is provided on the vapor-phase boil-off gas bypass line 512.

That the vapor-phase boil-off gas bypasses the boil-off gas heat exchanger 30 is for the purpose of achieving the same object as the above-described low-temperature boil-off gas bypasses the boil-off gas heat exchanger 30. Accordingly, the high-temperature boil-off gas discharged from the boil-off gas compressor 20 is not cooled by the low-temperature boil-off gas or the vapor-phase boil-off gas in the boil-off gas heat exchanger 30, and thus the lubricant L can be sufficiently heated.

That is, the high-temperature boil-off gas heated in the boil-off gas compressor 20 is transferred to the boil-off gas heat exchanger 30 by opening the high-pressure boil-off gas return valve 311, and the low-temperature boil-off gas discharged from the liquefied gas storage tank 10 does not cool the high-temperature boil-off gas by closing the boil-off gas supply valves 211a and opening the boil-off gas bypass valve 331.

In addition, the vapor-phase boil-off gas discharged from the gas-liquid separator 50 is not introduced into the boil-off gas heat exchanger 30 but bypasses the boil-off gas heat exchanger 30 along the vapor-phase boil-off gas bypass line 512 by closing the vapor-phase boil-off gas transfer valve 511 and opening the vapor-phase boil-off gas bypass valve 513, so that the vapor-phase boil-off gas does not cool the high-temperature boil-off gas.

Thus, the lubricant L caught in the boil-off gas heat exchanger 30 can be effectively removed using the high-temperature boil-off gas.

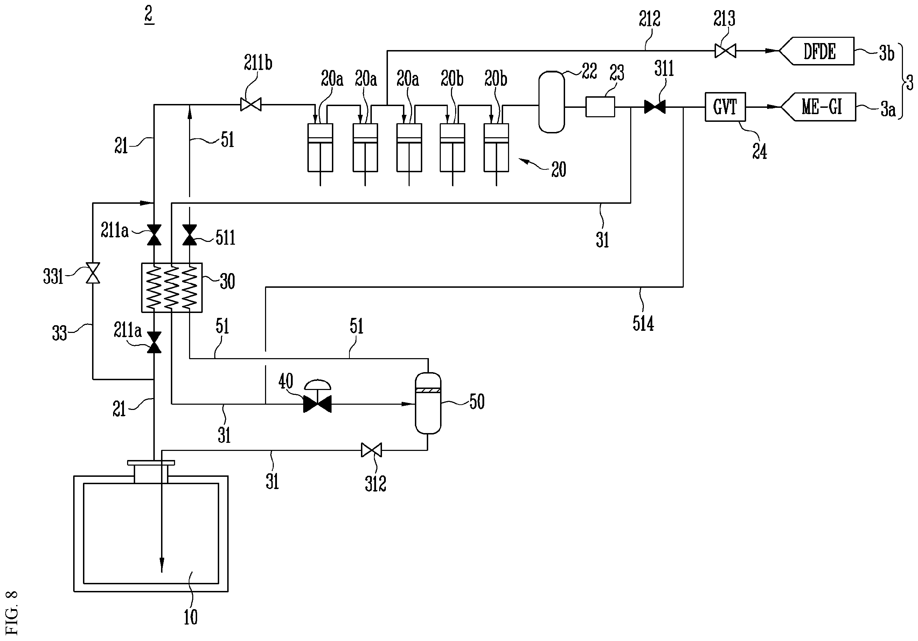

FIG. 8 is a conceptual view of a boil-off gas reliquefaction system in accordance with a sixth embodiment of the present invention.

Referring to FIG. 8, as compared with the fifth embodiment, the boil-off gas reliquefaction system 2 in accordance with the sixth embodiment of the present invention may further include a high-temperature boil-off gas supply line 514, and the vapor-phase boil off gas bypass line 512 may be omitted. In FIG. 8, valves indicated in black represent that they are in a closed state.

In this embodiment, when high-temperature boil-off gas compressed in the boil-off gas compressor 20 is injected into the boil-off gas heat exchanger 30 so as to remove the lubricant L introduced into the boil-off gas heat exchanger 30, the high-temperature boil-off gas supply line 514 may transfer the high-temperature boil-off gas discharged from the boil-off gas heat exchanger 30 to the consumer 3.

The high-temperature boil-off supply line 514 may branch off upstream of the decompression valve 40 on the boil-off gas return line 31 to be connected upstream of the consumer 3 on the boil-off gas supply line 21. That is, unlike the above-described embodiment, in this embodiment, the high-temperature boil-off gas may be extracted in a high pressure state from boil-off gas return line 31.

The high-temperature boil-off gas mixed with the lubricant L while heating the lubricant L and pushing the lubricant L from the boil-off gas heat exchanger 30 may be transferred to the consumer 3 to be consumed in the consumer 3. Thus, in this embodiment, since the lubricant L removed from the boil-off gas heat exchanger 30 is not recirculated, the lubricant L is prevented from being introduced into the liquefied gas storage tank 10.

In this embodiment, the high-pressure boil-off gas return valve 311 may be provided between a point at which the boil-off gas return line 31 branches off on the boil-off gas supply line 21 and a point at which the high-temperature boil-off gas supply line 514 is connected. When the high-pressure boil-off gas return value 311 is closed, the high-temperature boil-off gas compressed in the boil-off gas compressor 20 is introduced into the boil-off gas heat exchanger 30 along the boil-off gas return line 31.

However, low-temperature boil-off gas discharged from the liquefied gas storage tank 10 does not cool the high-temperature boil-off gas while flowing along the boil-off gas bypass line 33, when the boil-off gas supply valves 211a are closed and the boil-off gas bypass valve 331 is open.

In addition, the high-temperature boil-off gas obtained by removing the lubricant L from the boil-off gas heat exchanger 30 flows along the high-temperature boil-off gas supply line 514 when the decompression valve 40 is closed, to be transferred to the consumer 3 through the boil-off gas supply line 21.

Since the high-temperature boil-off gas is not introduced into the gas-liquid separator 50, vapor-phase boil-off gas may not be generated, and the vapor-phase boil-off gas transfer valve 511 may be closed. Thus, the high-temperature boil-off gas introduced into the boil-off gas heat exchanger 30 can sufficiently heat the lubricant L.

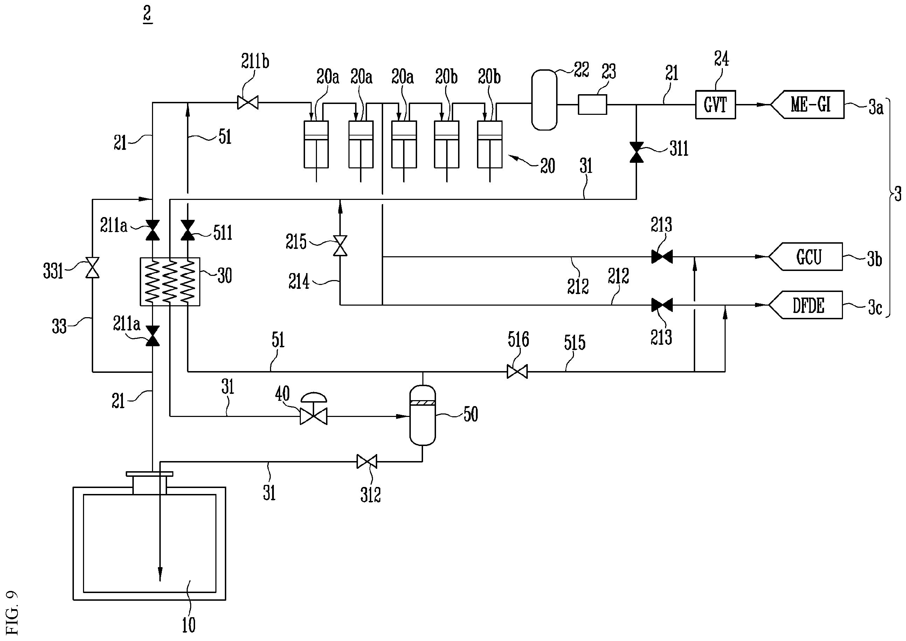

FIG. 9 is a conceptual view of a boil-off gas reliquefaction system not being part of the claimed invention.

Referring to FIG. 9, the boil-off gas reliquefaction system 2 may use low-pressure/high-temperature boil-off gas compressed in the low-pressure-state boil-off gas compressors 20a, unlike that the fifth and sixth embodiments in which the high-pressure/high-temperature boil-off gas compressed in the high-pressure-stage boil-off gas compressors 20b is used.

To this end, a low-pressure boil-off gas return line 214 which branches off on the low-pressure boil-off gas supply line 212 as a side stream to transfer high-temperature boil-off gas (40 Celsius degrees, e.g., 43 Celsius degrees) to the boil-off gas heat exchanger 30 may be provided, in replacement of the vapor-phase boil-off gas bypass line 512 in the fifth embodiment or the high-temperature boil-off gas supply line 514 in the sixth embodiment, and a low-pressure boil-off gas return valve 215 for controlling the flow of the low-pressure boil-off gas return line 214 is provided on the low-pressure boil-off gas return line 214.

The low-pressure boil-off gas return line 214 may inject high-temperature boil-off gas compressed in the low-pressure-stage boil-off gas compressors 20a into the boil-off gas heat exchanger 30 so as to remove the lubricant L introduced into the boil-off gas heat exchanger 30.

The low-pressure boil-off gas return line 214 braches off on the low-pressure boil-off gas supply line 212 to be connected upstream of the boil-off gas heat exchanger 30 on the boil-off gas return line 31. Therefore, in order to remove the lubricant L of the boil-off gas heat exchanger 30, the high-temperature boil-off gas compressed in the low-pressure-stage boil-off gas compressors 20a may be transferred to the boil-off gas heat exchanger 30 by closing the high-pressure boil-off gas return valve 311 provided on the boil-off gas return line 31 and opening the low-pressure boil-off gas return valve 215.

As described in the above-described other embodiments, the high-temperature boil-off gas introduced into the boil-off gas heat exchanger 30 is not cooled due to low-temperature boil-off gas discharged from the liquefied gas storage tank 10.

The high-temperature boil-off gas may be provided not to be heat-exchanged with vapor-phase boil-off gas discharged from the gas-liquid separator 50. To this end, this example further includes a high-temperature boil-off gas transfer line 515, and a high-temperature boil-off gas transfer valve 516 may be provided on the high-temperature boil-off gas transfer line 515.

The high-temperature boil-off gas transfer line 515 may be connected to the low pressure consumer 3 from the gas-liquid separator 50. For example, the high-temperature boil-off gas transfer line 515 may branch off on the vapor-phase boil-off gas transfer line 51 connected to the boil-off gas heat exchanger 30 or the boil-off gas compressor 20 from the gas-liquid separator 50 to be connected to the low pressure consumer 3 or the low-pressure boil-off gas supply line 212.

The high-temperature boil-off gas compressed in the low-pressure-stage boil-off gas compressors 20a is transferred to the boil-off gas return line 31 when the low-pressure boil-off gas return valve 215 is open, to be introduced into the boil-off gas heat exchanger 30. The low-pressure boil-off gas supply valve 213 provided on the low-pressure boil-off gas supply line 212 may be closed.

Low-pressure/high-temperature boil-off gas introduced into the boil-off gas heat exchanger 30 may heat and push the lubricant L caught in the boil-off gas heat exchanger 30. Subsequently, the high-temperature boil-off gas is transferred to the gas-liquid separator 50 via the decompression valve 40. However, since the high-temperature boil-off gas used to remove the lubricant L has low pressure, a considerable decrease in temperature does not occur even when the high-temperature boil-off gas is decompressed by the decompression valve 40 (e.g., the temperature of the high-temperature boil-off gas may be decreased from 43 Celsius degrees to 42 Celsius degrees when the pressure of the high-temperature boil-off gas is decompressed from 10 bar to 7 bar).

Subsequently, the high-temperature boil-off gas in a vapor state, which is introduced into the gas-liquid separator 50, may be supplied to the DFDE low pressure engine 3b and/or the gas combustion apparatus 3c as the low pressure consumer 3 along the high-temperature boil-off gas transfer line 515, when the vapor-phase boil-off gas transfer valve 511 provided on the vapor-phase boil-off gas transfer line 51 is closed and the high-temperature boil-off gas transfer valve 516 provided on the high-temperature boil-off gas transfer line 515 is open.

To this end, the high-temperature boil-off gas transfer line 515 may be connected downstream of the low-pressure boil-off gas supply valve 213 provided on the low-pressure boil-off gas supply line 212, to supply the high-temperature boil-off gas to the low pressure consumer 3 when the low-pressure boil-off gas supply valve 213 is closed.

As described above, the high-temperature boil-off gas (not mixed with the lubricant L) compressed in the low-pressure-stage boil-off compressors 20a is used to remove the lubricant L of the boil-off gas heat exchanger 30, and the high-temperature boil-off gas mixed with the lubricant L is consumed in the low pressure consumer 3, so that the lubricant L remaining in the boil-off gas heat exchanger 30 can be effectively removed.

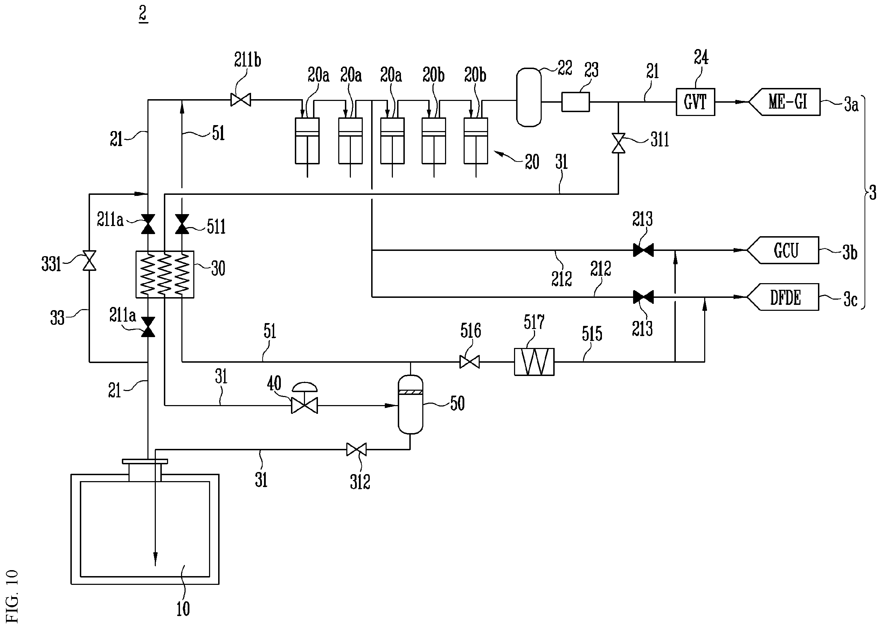

FIG. 10 is a conceptual view of a boil-off gas reliquefaction system not being part of the claimed invention.

Referring to FIG. 10, the boil-off gas reliquefaction system 2 in accordance with the eighth embodiment of the present invention does not use low-pressure/high-temperature boil-off gas compressed in the low-pressure-stage boil-off gas compressors 20a, but may use high-pressure/high-temperature boil-off gas compressed in the high-pressure-stage boil-off gas compressors 20b to remove the lubricant L.

The low-pressure boil-off gas return line 214 may be omitted, and the high-pressure/high-temperature boil-off gas may be introduced into the boil-off gas heat exchanger 30 along the boil-off gas return line 31, when the high-pressure boil-off gas return value 311 is open.

Subsequently, high-temperature boil-off gas discharged from the boil-off gas heat exchanger 30 may be decompressed and cooled while passing through the decompression valve 40. For example, when the high-temperature boil-off gas is decompressed from 300 bar to 7 bar, the high-temperature boil-off gas of 43 Celsius degrees may be cooled to -37 Celsius degrees.

The high-temperature boil-off gas passing through the decompression valve 40 is introduced into the gas-liquid separator 50. Vapor-phase boil-off gas in the high-temperature boil-off gas may be supplied to the low pressure consumer 3 along the high-temperature boil-off gas transfer line 515, when the vapor-phase boil-off gas transfer valve 511 is closed and the high-temperature boil-off gas transfer valve 516 is open.

However, unlike the above-described embodiment, since the high-temperature boil-off gas used to remove the lubricant L has high pressure, a considerable decrease in temperature occurs when the high-temperature boil-off gas is decompressed by the decompression valve 40.

Therefore, the high-temperature boil-off gas transferred to the low pressure consumer 3 may not be suitable for a required temperature of the low pressure consumer 3. Hence, in this embodiment, a gas heater 517 may be provided on the high-temperature boil-off transfer line 515.

The gas heater 517 may heat boil-off gas which is compressed in the high-pressure-stage boil-off gas compressors 20b and passes through the boil-off gas heat exchanger 30 and the decompression valve 40 and transfer the heated boil-off gas to the low pressure consumer 3. For example, the gas heater 517 may heat the high-temperature boil-off gas cooled to -37 Celsius degrees or so while passing through the decompression valve 40 to 40 Celsius degrees or so. A heat source used by the gas heater 517 is not particularly limited.

As described above, the lubricant L caught in the boil-off gas heat exchanger 30, etc. is heated and then strongly pushed using the high-pressure/high-temperature boil-off gas, to be effectively removed. Further, the high-temperature boil-off gas mixed with the lubricant L is consumed in the low pressure consumer 3, so that the lubricant L can be prevented from being introduced into the liquefied gas storage tank 10.

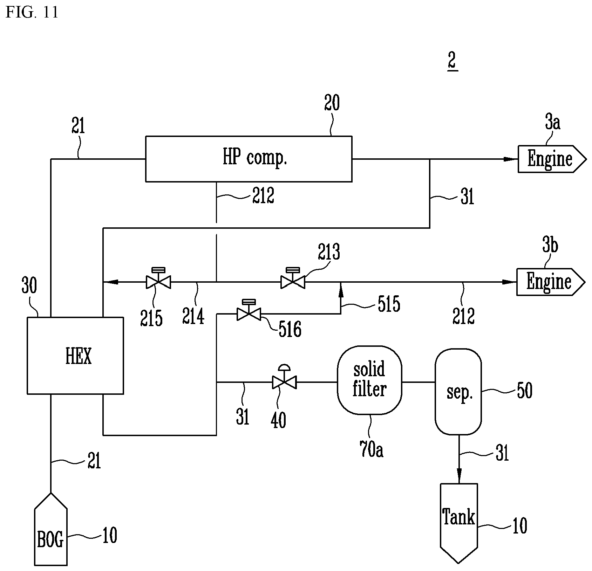

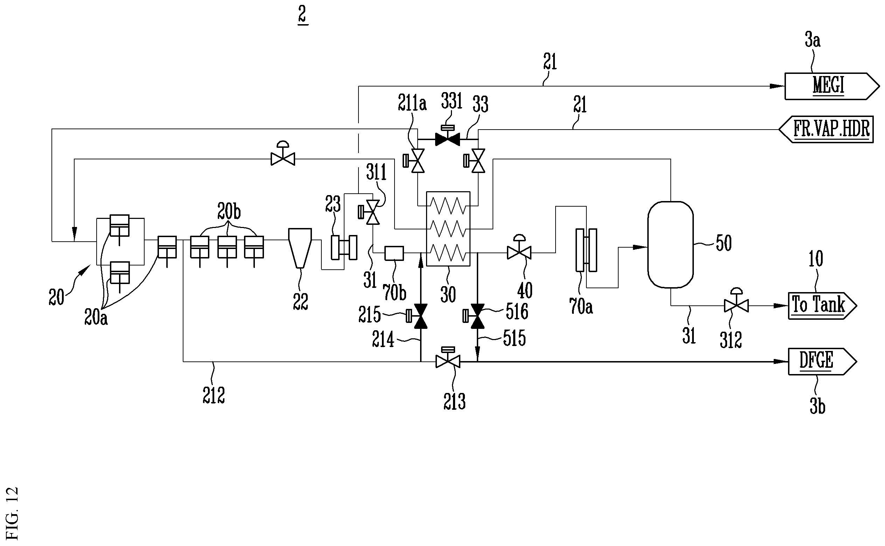

FIGS. 11 and 12 are conceptual views of a boil-off gas reliquefaction system in accordance with a ninth embodiment of the present invention.

Referring to FIGS. 11 and 12, the boil-off gas reliquefaction system 2 in accordance with the ninth embodiment of the present invention may use high-temperature high-speed boil-off gas compressed in the low-pressure-stage (e.g., two-stage) boil-off gas compressor 20 so as to remove the lubricant L introduced into the boil-off gas heat exchanger 30.

To this end, in this embodiment, a low-pressure boil-off gas return line 214 is provided. The low-pressure boil-off gas return line 214 may branch off on the low-pressure boil-off gas supply line 212 to inject high-temperature boil-off gas into the boil-off gas heat exchanger 30.

Also, in this embodiment, boil-off gas injected from the low-pressure-stage boil-off gas compressors 20a may be supplied to the low pressure engine 3b so as to remove the lubricant introduced into the boil-off gas heat exchanger 30. To this end, a high-temperature boil-off gas transfer line 515 is provided.

The high-temperature boil-off gas transfer line 515 braches off upstream of the decompression valve 40 on the boil-off gas return line 31 to be connected to the low pressure engine 3b. Thus, the high-temperature boil-off gas transfer line 515 transfers high-temperature boil-off gas discharged from the boil-off gas heat exchanger 30 to the low pressure engine 3b upstream of the decompression valve 40.

The high-temperature boil-off gas transfer line 515 may be connected downstream of the low-pressure boil-off gas supply valve 213 on the low-pressure boil-off gas supply line 212. In this embodiment, when high-temperature boil-off gas compressed in the low-pressure-stage boil-off gas compressors 20a is injected into the boil-off gas heat exchanger 30 through the low-pressure boil-off gas return line 214 so as to remove the lubricant L introduced into the boil-off gas heat exchanger 30, the low-pressure boil-off gas supply valve 213 provided on the low-pressure boil-off gas supply line 212 may be closed.

That is, when removal of the lubricant L of the boil-off gas heat exchanger 30 is implemented, high-temperature high-speed boil-off gas discharged from the low-pressure-stage boil-off gas compressors 20a may be introduced into the boil-off gas heat exchanger 30 along the low-pressure boil-off gas return line 214 branching off on the low-pressure boil-off gas supply line 212 and then joined into the low-pressure boil-off gas supply line 212 along the high-temperature boil-off gas transfer line 515 upstream of the boil-off gas heat exchanger 30 to be supplied to the low pressure engine 3b.

Thus, in this embodiment, gas used to remove the lubricant is used in the generator engine, so that efficiency can be improved in terms of system operation and cost. Hereinafter, a cleaning process will be described in more detail.

In the cleaning process, the decompression valve 40 is closed in a state in which the boil-off gas compressor 20 operates and the low pressure engine 3b operates in a gas mode. However, the flow from the boil-off gas compressor 20 to the boil-off gas heat exchanger 30 is reversed, which may have bad influence on a lubricant filter 70b which will be described later. Therefore, closing of a passive valve (not shown) provided between the lubricant filter 70b and the boil-off gas heat exchanger 30 may be made.

Subsequently, low-pressure boil-off gas discharged from the liquefied gas storage tank 10 is provided to bypass the boil-off gas heat exchanger 30 through opening of the boil-off gas bypass valve 331 and closing of the boil-off gas supply valves 211a.

In addition, the low-pressure boil-off gas return valve 215 provided on the low-pressure boil-off gas return line 214 is open. The low-pressure boil-off gas return valve 215 may be provided in plurality. Any one of the plurality of the plurality of low-pressure boil-off gas return valves may be On/Off type block valve, and another of the plurality of the plurality of low-pressure boil-off gas return valves may be a control valve capable of controlling an opening degree.

The low-pressure boil-off gas return valve 215 capable of controlling an opening degree may be open to a low opening degree (e.g., 10%), and then the opening degree may extend to 100% when the pressure of the high-temperature boil-off gas transfer line 515 reaches a certain pressure (e.g., 10 barg). In addition, the high-temperature boil-off gas transfer valve 516 of the high-temperature boil-off gas transfer line 515 may be open.

In the cleaning process, the low-pressure boil-off gas supply valve 213 provided on the low-pressure boil-off gas supply line 212 may be closed. However, the flow rate of high-temperature boil-off gas introduced into the boil-off gas heat exchanger 30 may be changed by controlling the opening degree of the low-pressure boil-off gas supply valve 213, and the temperature of boil-off gas introduced into the low pressure engine 3b may also be changed.

Thus, in this embodiment, the opening degree of the low-pressure boil-off gas supply valve 213 can be automatically controlled while allowing the temperature of boil-off gas at a front end of the low pressure engine 3b to be suitable for a required temperature (e.g., 20 Celsius degrees) of the low pressure engine 3b.

The cleaning process may be made by maintaining the above-described state for a certain time (e.g., one hour or so). However, in the cleaning process, the load of the low pressure engine 3b may be maintained as a low load (15 to 50%) so as to prevent abnormal combustion due to introduction of the lubricant L. This considers that the lubricant L of about 97 g or so, which is calculated below, may be introduced into the low pressure engine 3b in laden voyage.

The cleaning process may be made according to a selection of a ship owner. However, the cleaning process is preferably made for every ballast voyage, regardless of how much the boil-off gas heat exchanger 30 is polluted by the lubricant L.

In this embodiment, a lubricant filter 70a may be provided between the decompression valve 40 and the gas-liquid separator 50. The lubricant filter 70a may be a solid filter. The lubricant filter 70a filters the lubricant L transferred in a vapor state, so that pollution of boil-off gas introduced into the liquefied gas storage tank 10 can be prevented.

In this embodiment, the lubricant filter 70b is provided downstream of the high-pressure boil-off gas return valve 311 on the boil-off gas return line 31, to filter the lubricant L, so that the quality of liquefied gas stored in the liquefied gas storage tank 10 can be ensured.

In this embodiment, a separator 22 and a coalescer 23, which filter a foreign substance such as the lubricant L, may be provided downstream of the boil-off gas compressor 20. The separator 22 may be a cyclone. In this embodiment, the separator 22, the coalescer 23, the lubricant filter 70, and the like may be integrally referred to as a filter system (BCA).

Therefore, in this embodiment, the lubricant L to be mixed in the boil-off gas compressor 20 of the fourth and fifth stages may be filtered by two filtration systems. The first is the filter system and the second is the lubricant filter 70a between the decompression valve 40 and the gas-liquid separator 50.

For example, the separator 22 may have a filtering performance of 4 to 10 ppmw, the coalescer 23 may have a filtering performance of 0.1 ppmw (liquid)/2 to 4 ppmw (vapor), the lubricant filter 70b may have a filtering performance of 0.1 ppmw, and the lubricant filter 70a may have a filtering performance of 0.1 µm.

When the ship voyages at a ship speed of 15 knots in laden voyage (20 days + margin (anchoring, etc.)) under these filtering performances, the flow rate of boil-off gas introduced into the boil-off gas reliquefaction system may be 1,761kg/h (15 knots, 20 days) and 2,785 kg/h (anchoring, 2 days), and the amount of the lubricant L filtered by the lubricant filter 70b may be about 97 g in laden voyage.

That is, in this embodiment, the lubricant L can be suppressed from returning to the liquefied gas storage tank 10 through the two filtration systems. However, the lubricant L cannot be completely removed through these filtration systems, and deterioration of heat exchange performance in the boil-off gas heat exchanger 30 due to the lubricant L cannot be blocked.

Thus, in this embodiment, deterioration of heat exchange performance in the boil-off gas heat exchanger 30 due to pollution of the lubricant L can be dissolved through a warm gas cleaning/blowing system using high-pressure boil-off gas.

However, the warm gas cleaning/blowing system is for the purpose of ensuring heat exchange efficiency of the boil-off gas heat exchanger 30. Since removal of the lubricant L in the boil-off gas heat exchanger 30 cannot be completely ensured, this embodiment is provided with the warm gas cleaning/blowing system together with the filtration systems, so that a problem caused by the lubricant L used in the high-pressure-stage boil-off gas compressors 20b can be completely prevented.

Specifically, the warm gas cleaning/blowing system melts the lubricant L remaining in the boil-off gas heat exchanger 30 by heating the boil-off gas heat exchanger 30 by using boil-off gas discharged from the low-pressure-stage boil-off gas compressors 20a, which is not mixed with the lubricant L, and then supplies the lubricant L together with the boil-off gas to the low pressure engine 3b.

In this embodiment, high-temperature boil-off gas included in the lubricant L is not transferred to the decompression valve 40 or the gas-liquid separator 50, and thus there is no problem that the gas-liquid separator 50 and overall configurations are polluted by the lubricant L.

In addition, there is no risk that the liquid-phase lubricant L is agglomerated in the gas-liquid separator 50 during the cleaning process, and a concern that the agglomerated lubricant L will be introduced into the liquefied gas storage tank 10 can also be completely resolved.

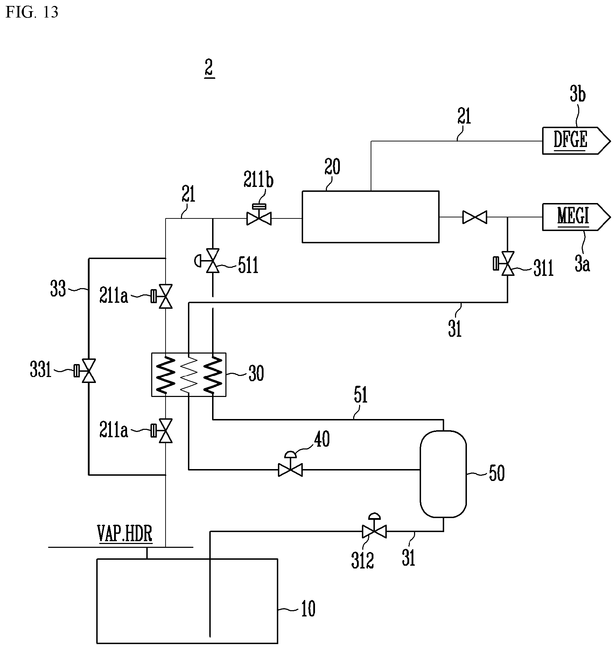

FIG. 13 is a conceptual view of the boil-off reliquefaction system not being part of the claimed invention.

Hereinafter, gas flow represented according to states (cool-down, start-up, stop, and trip) of the boil-off gas reliquefaction systems 2 in accordance with the above-described embodiments of the present invention will be described with reference to FIG. 13.

First, in the case of a cool-down process, the boil-off gas compressor 20 operate by using low-temperature boil-off gas discharged via a vapor header from the liquefied gas storage tank 10, and boil-off gas flows into the boil-off gas supply line 21 and the low-pressure boil-off gas supply line 212. The boil-off gas supply valve 211a may be open and the boil-off gas bypass valve 331 may be closed.

Subsequently, the decompression valve 40 and the liquid-phase boil-off gas return valve 312 are closed, and the high-pressure boil-off gas return valve 311 is open to a constant opening degree (10% or so, 5% per minute), so that low-temperature boil-off gas passing through the boil-off gas compressor 20 is introduced into the boil-off gas return line 31 for a certain time (about 5 minutes) to implement cooling.

Subsequently, after the high-pressure boil-off gas return valve 311 is completely open to 100%, the decompression valve 40 may be open to a constant opening degree (10% or so, 5% per minute), and the set point of the vapor-phase boil-off gas transfer valve 511 may be set to 5 barg or so. The gas-liquid separator 50 and the boil-off gas heat exchanger 30 may be cooled through the vapor-phase boil-off gas transfer line 51.

Subsequently, when the level in the gas-liquid separator 50 reaches a certain level (e.g., 30%), the liquid-phase boil-off gas return valve 312 is open to a certain opening degree (20% or so), so that the boil-off gas cools the boil-off gas return line 31 while returning to the liquefied gas storage tank 10 along the boil-off gas return line 31.

According to the cool-down process, in the present invention, the down-stream of decompression valve 40 on the boil-off gas return line 31, the vapor-phase boil-off gas transfer line 51, and the like are cooled, so that unnecessary vaporization of gas can be prevented.

In the case of a start-up process, the start-up process may be made after it is checked that the cool-down has been completed. The decompression valve 40 may operate in a pressure control mode (PIC) or a flow control mode (FIC).

Specifically, the decompression valve 40 may operate in the pressure control mode while allowing the pressure of gas supplied to the high pressure engine 3a to be suitable for a required pressure of the high pressure engine 3a when the high pressure engine 3a operates. Alternatively, the decompression valve 40 may operate in the flow control mode while checking the flow rate of boil-off gas, etc.

In the case of a stop process, first, the decompression valve 40 is closed (the opening degree of the decompression valve 40 is decreased to 30% per minute). The opening degree of the decompression valve 40 may be slowly decreased, and the flow rate of boil-off gas between the decompression valve 40 and the gas-liquid separator 50 is reduced.

Subsequently, the high-pressure boil-off gas return valve 311 is closed, and therefore, the flow rate of boil-off gas from the boil-off gas return line 31 to the gas-liquid separator 50 is reduced.

Subsequently, the decompression valve 40 is completely open to 100%, so that the boil-off gas between the high-pressure boil-off gas return valve 311 and the gas-liquid separator 50 is decompressed.

Subsequently, the liquid-phase boil-off gas return valve 312 is completely open to 100%, so that condensed boil-off gas is drained from the gas-liquid separator 50 to the liquefied gas storage tank 10.

Subsequently, when the level in the gas-liquid separator 50 is sensed as a certain level (5% or so) or less, the set point of the vapor-phase boil-off gas transfer valve 511 is decreased to 1.5 barg, so that boil-off gas in the vapor-phase boil-off gas transfer line 51 is decompressed, thereby completing the stop process.

In the case of a trip process, first, the high-pressure boil-off gas return valve 311 is closed, and the flow of boil-off gas toward the boil-off gas heat exchanger 30, the decompression valve 40, and the gas-liquid separator 50 is interrupted.

Subsequently, the decompression valve 40, the liquid-phase boil-off gas return valve 312, and the vapor-phase boil-off gas transfer valve 511 are completely open to 100%, so that boil-off gas in the boil-off gas return line 31 and the vapor-phase boil-off gas transfer line is decompressed, thereby completing the trip process.

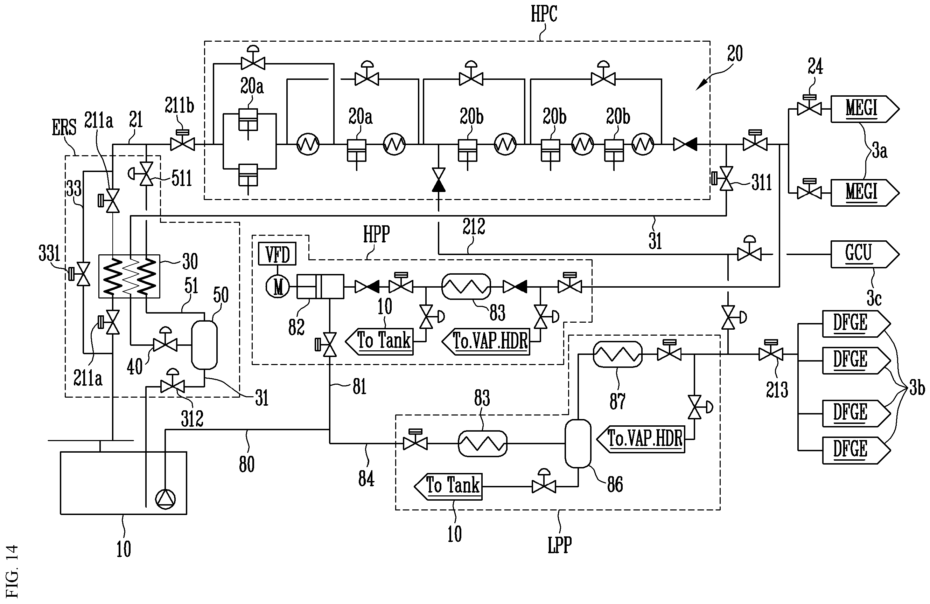

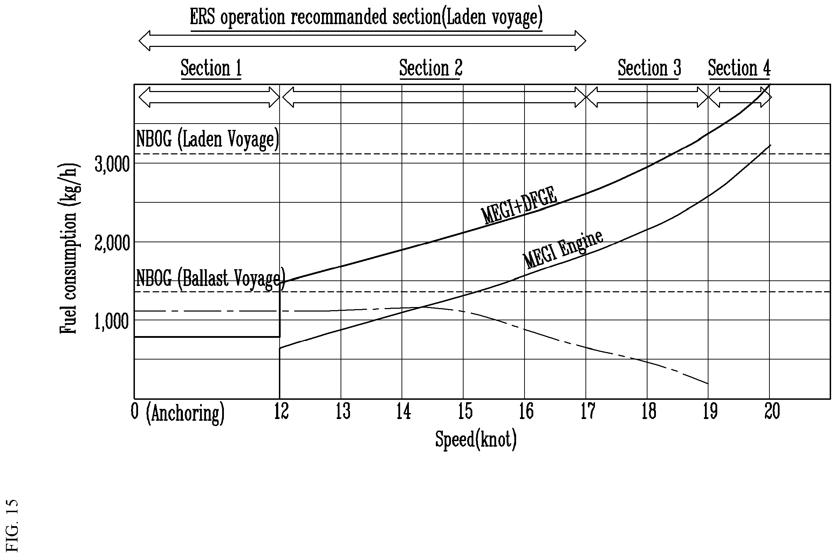

FIG. 14 is a conceptual view of a gas treatment system having the boil-off gas reliquefaction system not being part of the claimed invention. FIG. 15 is a graph illustrating a gas treatment state of the gas treatment system in accordance with the present invention.

For reference, the present invention is not limited to the above-described boil-off gas reliquefaction system 2, and may be a gas treatment system which further includes other components in addition to the boil-off gas reliquefaction system 2 so as to consume, as a fuel, boil-off gas or liquefied gas, which is stored in the liquefied gas storage tank 10.

Referring to FIG. 14, the gas treatment system having the boil-off gas reliquefaction system 2 not being part of the claimed invention may include a boil-off gas supply unit HPC, a high-pressure liquefied gas supply unit HPP, a low-pressure liquefied gas supply unit, and a boil-off gas liquefaction unit ERS, and the boil-off gas supply unit HPC and the boil-off gas liquefaction unit ERS may be referred to as the above-described boil-off gas reliquefaction system 2.

The boil-off gas supply unit HPC and the boil-off gas liquefaction unit ERS have already been described. Therefore, hereinafter, the high-pressure liquefied gas supply unit HPP and the low-pressure liquefied gas supply unit LPP will be described.

The high-pressure liquefied gas supply unit HPP supplies liquefied gas discharged from the liquefied gas storage tank 10 to the high pressure engine 3a vas a high pressure pump 82 and a high pressure vaporizer 83.

A liquefied gas supply line 80 extending to the outside of the liquefied gas storage tank 10 from a transfer pump (reference numeral not shown) disposed in the liquefied gas storage tank 10 may branch off on a high-pressure liquefied gas supply line 81 to be connected to the high pressure engine 3a.

(Overpressure) liquefied gas is transferred to the liquefied gas storage tank 10, a bent mast (reference numeral not shown), or the like downstream of the high-pressure 82 or the high pressure vaporizer 83, so that overpressure in supply of the liquefied gas can be prevented.

On the other hand, the low-pressure liquefied gas supply unit LPP supplied liquefied gas discharged from the liquefied gas storage tank 10 to the low pressure engine 3b, the gas combustion apparatus 3c, or the like via a forcible vaporizer 85, a heavy carbon separator 86, and a heater 87.

The forcible vaporizer 85 and the like may be provided on a low-pressure liquefied gas supply line 84 branching off on the liquefied gas supply line 80. That is, the liquefied gas supply line 80 branches off into the high-pressure liquefied gas supply line 81 and the low-pressure liquefied gas supply line 84 downstream of the transfer pump to be respectively connected to the high pressure engine 3a and the low pressure engine 3b.

As described above, the gas treatment system which can further include a configuration for supplying liquefied gas in addition to the boil-off gas reliquefaction system 2 can variously control whether boil-off gas/liquefied gas is to be supplied according to an operation condition of the ship 1. This will be described with reference to FIGS. 14 and 15 together.

For example, in the gas treatment system of the present invention, boil-off gas is sufficiently generated in laden voyage in which liquefied gas is sufficiently laden, and therefore, boil-off gas discharged from the liquefied gas storage tank 10 may be compressed by the boil-off gas compressor 20 via the vapor header, to be supplied to the high pressure engine 3a, the low pressure engine 3b, or the like.

FIG. 15 is a graph illustrating gas consumption according to ship speed, which is divided into four sections according to the ship speed. First, in the case of Section 1 from an anchoring state to a low-speed operation state of less than 12 knots, it can be seen that the consumption of boil-off gas in laden voyage exceeds gas consumption caused by the high pressure engine 3a and the low pressure engine 3b.

Also, in the case of Section 2 in which gas consumption caused by the high pressure engine 3a, etc. is gradually increased according to the ship speed, the consumption of boil-off gas in the laden voyage still exceeds the gas consumption caused by the high pressure engine 3a, etc.

Therefore, the boil-off gas reliquefaction system 2 of the present invention preferably liquefies boil-off gas by operating in Section 1 and Section 2 in laden voyage.

However, in the case of Section 3 in which the ship speed is high, the boil-off gas reliquefaction system 2 may not operate. In the case of Section 4 in which the ship speed is very high, the gas consumption caused by the high pressure engine 3a, etc. exceeds the consumption of boil-off gas, and therefore, the supply of liquefied gas may be made without operating the boil-off gas reliquefaction system 2.

As described above, in accordance with the present invention, in the gas treatment system which further includes the configuration for supplying liquefied gas in addition to the boil-off gas reliquefaction system 2, the reliquefaction of boil-off gas, the supply of liquefied gas, and the like can be efficiently controlled by considering the ship speed, etc.

The present invention is not limited to the embodiments described above, and it will be apparent that a combination of the embodiments or a combination of at least one of the embodiments and prior art may be included as still another embodiment.

## Claims

1. A boil-off gas reliquefaction system (2), comprising:
a boil-off gas compressor (20) configured to compress, in multi-stages, boil-off gas generated in a liquefied gas storage tank (10) and supply the compressed boil-off gas to a consumer (3);
a boil-off gas heat exchanger (30) configured to perform heat exchange between boil off gas compressed in the boil-off gas compressor (20) and boil-off gas introduced into the boil-off gas compressor (20);
a decompression valve (40) configured to decompress the boil-off gas compressed in the boil-off gas compressor (20) and then heat-exchanged in the boil-off gas heat exchanger (30); and
a gas-liquid separator (50) configured to perform gas-liquid separation on the boil-off gas decompressed in the decompression valve (40),
wherein boil-off gas to be introduced into the boil-off gas heat exchanger (30) comprises lubricant used in the boil-off gas compressor (20b) of a high pressure stage,
**characterized in that**
the boil-off gas reliquefaction system (2) further comprises a high-temperature boil-off gas transfer line (515) configured to transfer high-temperature boil-off gas discharged from the boil-off gas heat exchanger (30) to a low pressure consumer (3) upstream of the decompression valve (40), when high-pressure boil-off gas compressed in the boil-off gas compressor (20) is injected into the boil-off gas heat exchanger (30) to remove the lubricant introduced into the boil-off gas heat exchanger (30).

2. The boil-off gas reliquefaction system (2) of claim 1, further comprising:
a boil-off gas bypass line (33) configured to allow boil-off gas discharged from the liquefied gas storage tank (10) to be transferred to the boil-off gas compressor (20) by bypassing the boil-off gas heat exchanger (30); and
a boil-off gas bypass valve (331) configured to control flow of the boil-off gas bypass line (33),
wherein the boil-off gas bypass valve (331) allows low-temperature boil-off gas discharged from the liquefied gas storage tank (10) to flow into the boil-off gas bypass line (33) such that boil-off gas injected into the boil-off gas heat exchanger (30) maintains a high temperature state, when high-pressure boil-off gas compressed in the boil-off gas compressor (20) is injected into the boil-off gas heat exchanger (30) to remove the lubricant introduced into the boil-off gas heat exchanger (30).

3. The boil-off gas reliquefaction system (2) of claim 1, further comprising:
a boil-off gas supply line (21) coimected to the consumer (3) via the boil-off gas compressor (20) from the liquefied gas storage tank (10); and
a boil-off gas return line (31) branching off downstream of the boil-off gas compressor (20) on the liquefied gas storage tank (10) to be connected to the liquefied gas storage tank (10) via the boil-off gas heat exchanger (30), the decompression valve (40), and the gas-liquid separator (50).

4. The boil-off gas reliquefaction system (2) of claim 3, wherein the high-temperature boil-off gas transfer line (515) branches off upstream of the decompression valve (40) on the boil-off gas return line (31) to be connected to the low pressure consumer (3).

5. The boil-off gas reliquefaction system (2) of claim 4, further comprising:
a low-pressure boil-off gas supply line (212) configured to supply boil-off gas compressed in the boil-off gas compressor (20a) of a low pressure stage to the low pressure consumer (3); and
a low-pressure boil-off gas return line (214) branching off on the low-pressure boil-off gas supply line (212) to inject high-temperature boil-off gas into the boil-off gas heat exchanger (30).

6. The boil-off gas reliquefaction system (2) of claim 5, further comprising a low-pressure boil-off gas supply valve (213) configured to control flow of the low-pressure boil-off gas supply line (212),
wherein the low-pressure boil-off gas supply valve (213) is closed when high-pressure boil-off gas compressed in the boil-off gas compressor (20a) of the low pressure stage is injected into the boil-off gas heat exchanger (30) to remove the lubricant introduced into the boil-off gas heat exchanger (30).

7. The boil-off gas reliquefaction system (2) of claim 6, wherein the high-temperature boil-off gas transfer line (515) is connected downstream of the low-pressure boil-off gas supply valve (213) on the low-pressure boil-off gas supply line (212).

8. A ship (1) comprising the boil-off gas reliquefaction system (2) of any one of claims 1 to 7.

## Patentansprüche

1. Rückverflüssigungssystem für Verdampfungsverlustgas (2), das umfasst:
einen Verdampfungsverlustgas-Kompressor (20), der konfiguriert ist, in mehreren Stufen Verdampfungsverlustgas zu komprimieren, das in einem Lagertank für verflüssigtes Gas (10) erzeugt wird, und das komprimierte Verdampfungsverlustgas an einen Verbraucher (3) zu liefern;
einen Verdampfungsverlustgas-Wärmetauscher (30), der konfiguriert ist, einen Wärmeaustausch zwischen in dem Verdampfungsverlustgas-Kompressor (20) komprimiertem Verdampfungsverlustgas und in den Verdampfungsverlustgas-Kompressor (20) eingeführtem Verdampfungsverlustgas auszutauschen;
ein Dekompressionsventil (40), das konfiguriert ist, das in dem Verdampfungsverlustgas-Kompressor (20) komprimierte und dann in dem Verdampfungsverlustgas-Wärmetauscher (30) wärmeausgetauschte Verdampfungsverlustgas zu dekomprimieren; und
einen Gas/Flüssigkeits-Abscheider (50), der konfiguriert ist, eine Gas/Flüssigkeits-Abscheidung an dem in dem Dekompressionsventil (40) dekomprimierten Verdampfungsverlustgas auszuführen,
wobei Verdampfungsverlustgas, das in den Verdampfungsverlustgas-Wärmetauscher (30) einzuführen ist, ein Schmiermittel umfasst, das in dem Verdampfungsverlustgas-Kompressor (20b) einer Hochdruckstufe verwendet wird,
**dadurch gekennzeichnet, dass**
das Verflüssigungssystem für Verdampfungsverlustgas (2) ferner eine Hochtemperaturverdampfungsverlustgas-Übertragungsleitung (515) umfasst, die konfiguriert ist, Hochtemperaturverdampfungsverlustgas, das von dem Verdampfungsverlustgas-Wärmetauscher (30) ausgestoßen wird, zu einem dem Dekompressionsventil (40) vorgelagerten Niederdruckverbraucher (3) zu übertragen, wenn in dem Verdampfungsverlustgas-Kompressor (20) komprimiertes Hochdruckverdampfungsverlustgas in den Verdampfungsverlustgas-Wärmetauscher (30) eingeführt wird, um das in den Verdampfungsverlustgas-Wärmetauscher (30) eingeführte Schmiermittel zu entfernen.

2. Rückverflüssigungssystem für Verdampfungsverlustgas (2) nach Anspruch 1, das ferner umfasst:
eine Verdampfungsverlustgas-Umgehungsleitung (33), die konfiguriert ist, von dem Lagertank für verflüssigtes Gas (10) ausgestoßenem Verdampfungsverlustgas zu erlauben, an den Verdampfungsverlustgas-Kompressor (20) durch Umgehen des Verdampfungsverlustgas-Wärmetauschers (30) übertragen zu werden; und
ein Verdampfungsverlustgas-Umgehungsventil (331), das konfiguriert ist, einen Strom der Verdampfungsverlustgas-Umgehungsleitung (33) zu steuern,
wobei das Verdampfungsverlustgas-Umgehungsventil (331) von dem Lagertank für verflüssigtes Gas (10) ausgestoßenem Niedertemperaturverdampfungsverlustgas erlaubt, in die Verdampfungsverlustgas-Umgehungsleitung (33) zu fließen, so dass das in den Verdampfungsverlustgas-Wärmetauscher (30) eingeführte Verdampfungsverlustgas einen Hochtemperaturzustand beibehält, wenn in dem Verdampfungsverlustgas-Kompressor (20) komprimiertes Hochtemperaturverdampfungsverlustgas in den Verdampfungsverlustgas-Wärmetauscher (30) eingeführt wird, um das in den Verdampfungsverlustgas-Wärmetauscher (30) eingeführte Schmiermittel zu entfernen.

3. Rückverflüssigungssystem (2) für Verdampfungsverlustgas nach Anspruch 1, das ferner umfasst:
eine Verdampfungsverlustgas-Versorgungsleitung (21), die von dem Lagertank für verflüssigtes Gas (10) über den Verdampfungsverlustgas-Kompressor (20) mit dem Verbraucher (3) verbunden ist; und
eine Verdampfungsverlustgas-Rückführleitung (31), die dem Verdampfungsverlustgas-Kompressor (20) nachgelagert von dem Lagertank (10) für verflüssigtes Gas (10) abzweigt, um mit dem Lagertank für verflüssigtes Gas (10) über den Verdampfungsverlustgas-Wärmetauscher (30), das Dekompressionsventil (40) und den Gas/Flüssigkeits-Abscheider verbunden zu sein.

4. Rückverflüssigungssystem für Verdampfungsverlustgas (2) nach Anspruch 3, wobei die Hochtemperaturverdampfungsverlustgas-Übertragungsleitung (515) dem Dekompressionsventil (40) vorgelagert von der Verdampfungsverlustgasrückführleitung (31) abzweigt, um mit den Niederdruckverbraucher (3) verbunden zu sein.

5. Rückverflüssigungssystem für Verdampfungsverlustgas (2) nach Anspruch 4, das ferner umfasst:
eine Niederdruckverdampfungsverlustgas-Versorgungsleitung (212), die konfiguriert ist, in dem Verdampfungsverlustgas-Kompressor (20a) komprimiertes Verdampfungsverlustgas einer Niederdruckstufe an den Niederdruckverbraucher (3) zu liefern; und
eine Niederdruckverdampfungsverlustgas-Rückführleitung (214), die von der Niederdruckverdampfungsverlustgas-Versorgungsleitung (212) abzweigt, um Hochtemperaturverdampfungsverlustgas in den Verdampfungsverlustgas-Wärmetauscher (30) einzuspeisen.

6. Rückverflüssigungssystem für Verdampfungsverlustgas (2) nach Anspruch 5, das ferner ein Niederdruckverdampfungsverlustgas-Versorgungsventil (213) umfasst, das konfiguriert ist, einen Strom der Niederdruckverdampfungsverlustgas-Versorgungsleitung (212) zu steuern,
wobei das Niederdruckverdampfungsverlustgas-Versorgungsventil (213) geschlossen wird, wenn in dem Verdampfungsverlustgas-Kompressor (20a) komprimiertes Hochdruckverdampfungsverlustgas der Niederdruckstufe in den Verdampfungsverlustgas-Wärmetauscher (30) eingespeist wird, um das in den Verdampfungsverlustgas-Wärmetauscher (30) eingeführte Schmiermittel zu entfernen.

7. Rückverflüssigungssystem für Verdampfungsverlustgas (2) nach Anspruch 6, wobei die Hochtemperaturverdampfungsverlustgas-Übertragungsleitung (515) dem Niederdruckverdampfungsverlustgas-Versorgungsventil (213) nachgelagert mit der Niederdruckverdampfungsverlustgas-Versorgungsleitung (212) verbunden ist.

8. Schiff (1), das das Verflüssigungssystem für Verdampfungsverlustgas (2) nach einem der Ansprüche 1 bis 7 umfasst.

## Revendications

1. Un système (2) de reliquéfaction de gaz d'évaporation, comprenant :
un compresseur (20) de gaz d'évaporation configuré pour comprimer, sur plusieurs étages, du gaz d'évaporation généré dans un réservoir (10) de stockage de gaz liquéfié et fournir le gaz d'évaporation comprimé à un consommateur (3) :
un échangeur (30) de chaleur de gaz d'évaporation configuré pour effectuer un échange de chaleur entre le gaz d'évaporation comprimé dans le compresseur (20) de gaz d'évaporation et le gaz d'évaporation introduit dans le compresseur (20) de gaz d'évaporation ;
une vanne de décompression (40) configurée pour décompresser le gaz d'évaporation comprimé dans le compresseur (20) de gaz d'évaporation puis faisant l'objet d'un échange thermique dans l'échangeur (30) de chaleur de gaz d'évaporation ; et
un séparateur gaz-liquide (50) configuré pour effectuer une séparation gaz-liquide sur le gaz d'évaporation décomprimé dans la vanne de décompression (40),
le gaz d'évaporation à introduire dans l'échangeur (30) de chaleur de gaz d'évaporation comprenant du lubrifiant utilisé dans le compresseur (20b) de gaz d'évaporation d'un étage haute pression,
**caractérisé en ce que**
le système (2) de reliquéfaction de gaz d'évaporation comprend en outre une conduite (515) de transfert de gaz d'évaporation à haute température configurée pour transférer le gaz d'évaporation à haute température déchargé de l'échangeur (30) de chaleur de gaz d'évaporation vers un consommateur (3) à basse pression situé en amont de la vanne de décompression (40), lorsque le gaz d'évaporation à haute pression comprimé dans le compresseur (20) de gaz d'évaporation est injecté dans l'échangeur (30) de chaleur de gaz d'évaporation pour éliminer le lubrifiant introduit dans l'échangeur (30) de chaleur de gaz d'évaporation.

2. Le système (2) de reliquéfaction de gaz d'évaporation selon la revendication 1, comprenant en outre :
une conduite (33) de dérivation de gaz d'évaporation configurée pour permettre au gaz d'évaporation déchargé du réservoir (10) de stockage de gaz liquéfié d'être transféré au compresseur (20) de gaz d'évaporation en contournant l'échangeur (30) de chaleur de gaz d'évaporation ; et
une vanne (331) de dérivation de gaz d'évaporation configurée pour commander le débit de la conduite (33) de dérivation de gaz d'évaporation,
la vanne (331) de dérivation de gaz d'évaporation permettant au gaz d'évaporation à basse température déchargé du réservoir (10) de stockage de gaz liquéfié de s'écouler dans la conduite (33) de dérivation de gaz d'évaporation de sorte que le gaz d'évaporation injecté dans l'échangeur (30) de chaleur de gaz d'évaporation maintient un état de température élevée, lorsque le gaz d'évaporation à haute pression comprimé dans le compresseur (20) de gaz d'évaporation est injecté dans l'échangeur (30) de chaleur de gaz d'évaporation pour éliminer le lubrifiant introduit dans l'échangeur (30) de chaleur de gaz d'évaporation.

3. Le système (2) de reliquéfaction de gaz d'évaporation selon la revendication 1, comprenant en outre :
une conduite (21) d'alimentation en gaz d'évaporation connectée au consommateur (3) via le compresseur (20) de gaz d'évaporation depuis le réservoir (10) de stockage de gaz liquéfié ; et
une conduite (31) de retour de gaz d'évaporation bifurquant en aval du compresseur (20) de gaz d'évaporation sur le réservoir (10) de stockage de gaz liquéfié à raccorder au réservoir (10) de stockage de gaz liquéfié via l'échangeur (30) de chaleur de gaz d'évaporation, la vanne de décompression (40) et le séparateur gaz-liquide (50).

4. Le système (2) de reliquéfaction de gaz d'évaporation selon la revendication 3, dans lequel la conduite (515) de transfert de gaz d'évaporation à haute température bifurque en amont de la vanne de décompression (40) sur la conduite (31) de retour de gaz d'évaporation. à raccorder au consommateur basse pression (3).

5. Le système (2) de reliquéfaction de gaz d'évaporation selon la revendication 4, comprenant en outre :
une conduite (212) d'alimentation en gaz d'évaporation à basse pression configurée pour fournir au consommateur (3) à basse pression du gaz d'évaporation comprimé dans le compresseur (20a) de gaz d'évaporation d'un étage basse pression ; et
une conduite (214) de retour de gaz d'évaporation à basse pression bifurquant sur la conduite (212) d'alimentation en gaz d'évaporation à basse pression pour injecter du gaz d'évaporation à haute température dans l'échangeur (30) de chaleur de gaz d'évaporation.

6. Le système (2) de reliquéfaction de gaz d'évaporation selon la revendication 5, comprenant en outre une vanne (213) d'alimentation en gaz d'évaporation basse pression configurée pour commander le débit de la conduite (212) d'alimentation en gaz d'évaporation à basse pression,
la vanne (213) d'alimentation en gaz d'évaporation basse pression étant fermée lorsque le gaz d'évaporation haute pression comprimé dans le compresseur (20a) de gaz d'évaporation de l'étage basse pression est injecté dans l'échangeur (30) de chaleur de gaz d'évaporation pour éliminer le lubrifiant introduit dans l'échangeur (30) de chaleur de gaz d'évaporation.

7. Le système (2) de reliquéfaction de gaz d'évaporation selon la revendication 6, dans lequel la conduite (515) de transfert de gaz d'évaporation à haute température est connectée en aval de la vanne (213) d'alimentation en gaz d'évaporation à basse pression sur la conduite (212) d'alimentation en gaz d'évaporation à basse pression.

8. Un navire (1) comprenant le système (2) de reliquéfaction de gaz d'évaporation selon l'une quelconque des revendications 1 à 7.
